# EUROPÄISCHE PATENTSCHRIFT

(11) **EP 1 901 957 B1**
(45) Veröffentlichungstag und Bekanntmachung des Hinweises auf die Patenterteilung: **13.05.2020**
(21) Anmeldenummer: 06762372.8
(22) Anmeldetag: 04.07.2006
(51) Int. Cl.: B62M 7/02, F16D 25/0638, B60K 17/02, B62K 25/28, B62K 11/04

(54) **FAHRZEUG, INSBESONDERE MOTORRAD, SOWIE MOTOR-/GETRIEBEEINHEIT FÜR EIN FAHRZEUG**
VEHICLE IN PARTICULAR A MOTORCYCLE AND ENGINE/GEARBOX UNIT FOR A VEHICLE
VEHICULE, NOTAMMENT MOTOCYCLETTE ET UNITE MOTEUR/TRANSMISSION POUR UN VEHICULE

(30) Priorität: 14.07.2005 EP 05015290
(43) Veröffentlichungstag der Anmeldung: 26.03.2008
(73) Patentinhaber: Bayerische Motoren Werke Aktiengesellschaft, 80809 München (DE)
(72) Erfinder: THEOBALD, Markus, 85764 Unterschleissheim (DE)
(86) Internationale Anmeldenummer: PCT/EP2006/006478
(87) Internationale Veröffentlichungsnummer: WO 2007/006450

(56) Entgegenhaltungen:
- EP-A- 0 290 705
- EP-A- 1 302 700
- EP-A- 1 382 876
- EP-A1- 0 725 004
- EP-A1- 1 195 537
- EP-A2- 0 780 591
- EP-A2- 1 081 033
- DE-A1- 10 333 431
- DE-A1- 19 505 800
- DE-A1- 19 803 016
- GB-A- 229 782
- GB-A- 558 387
- GB-A- 1 567 774
- GB-A- 2 069 949
- GB-A- 2 220 595
- US-A- 4 132 281
- US-A- 4 265 330
- US-A- 4 603 754
- US-A- 5 348 112
- US-A1- 2002 063 004
- US-A1- 2003 106 733
- US-B1- 6 213 239
- US-B1- 6 315 096
- US-B1- 6 381 957

## Beschreibung

Die vorliegende Erfindung betrifft ein Fahrzeug, insbesondere ein Motorrad, gemäß dem Oberbegriff des Patentanspruches 1 sowie eine Motor-/Getriebeeinheit gemäß dem Oberbegriff des Patentanspruches 45.

Ein derartiges Fahrzeug bzw. eine derartige Motor-/Getriebeeinheit ist aus der EP 1 302 700 A2 bekannt.

### Stand der Technik

Bei herkömmlichen Motorrädern mit Ketten- bzw. Riementrieb ist das Ritzel, das die Kette bzw. den Antriebsriemen antreibt, üblicherweise mindestens circa 65 mm versetzt in Bezug auf die Achse angeordnet, an der die Hinterradschwinge angelenkt ist. Die Kupplung ist bei herkömmlichen Motorrädern üblicherweise auf der Getriebeeingangswelle angeordnet. In einer Seitenansicht des Motorrads gesehen "überdeckt" die Kupplung somit die Getriebeabtriebswelle. Unter der Getriebeabtriebswelle wird im folgenden die Welle verstanden, auf der das Ritzel angeordnet ist, welches die Kette bzw. den Riemen antreibt, welche bzw. welcher wiederum das Hinterrad antreibt. Üblicherweise befindet sich die Getriebeabtriebswelle vorderhalb der Schwingenachse.

Derartige herkömmliche Motorradkonzepte haben eine ganze Reihe von Nachteilen. Aufgrund des Versatzes zwischen dem Kettenritzel und der Schwingenachse ist ein gewisser Kettendurchhang erforderlich. Insbesondere bei geländegängigen Motorrädern, die einen Federweg von 150 mm und mehr haben, ist ein beträchtlicher Kettendurchhang erforderlich. Bei einem Motorrad mit einem Federweg von 300 mm ist beispielsweise ein Kettendurchhang von etwa 70mm erforderlich.

Ein großer Kettendurchhang führt zu relativ starken Reibungsverluste und erfordert eine spezielle Kettenführung. Bei einem großen Kettendurchhang ergibt sich auch ein hoher Kettenverschleiß. Eine weitere Folge des großen Kettendurchhangs können starke Laufgeräusche durch "Kettenpeitschen" sein. Eine "Kapselung" der Kette ist insbesondere bei großem Kettendurchhang konstruktiv aufwendig.

Ein weiteres Problem herkömmlicher Motorradkonzepte ist darin zu sehen, dass der Ritzeldurchmesser durch den für eine Schwenkbewegung der Schwinge erforderlichen Freigang gegenüber der Schwingenlagerung begrenzt ist. Problematisch ist ferner, dass der Schwingenholm neben bzw. unter dem Zugtrumm der Kette angeordnet ist, was ein relativ großes Stichmaß der Schwingenholme impliziert und im Fall einer Einarmschwinge die Konstruktion sehr aufwendig macht, weil zwischen dem Hinterrad und der Abtriebswelle des Getriebes noch das Motorgehäuse und die Schwingenlagerung mit einem Versatz in Bezug auf die Getriebeabtriebswelle untergebracht werden müssen. Da bei herkömmlichen Motorrädern die Schwingenholme immer zwischen dem oberen und dem unteren Kettentrumm liegen müssen, befindet sich die untere Federbeinanbindung auf einem relativ niedrigen Niveau, was sich wiederum ungünstig auf die Federbeinprogression auswirkt.

Wie bereits erwähnt ist die Kupplung bei herkömmlichen Motorrädern üblicherweise auf der Getriebeeingangswelle angeordnet. Auf der Getriebeeingangswelle treten recht hohe Drehmomente auf. Um diese hohen Drehmomente dauerhaft übertragen zu können, muss die Kupplung relativ groß sein oder im Ölbad laufen. Ölbadkupplungen haben den Nachteil, dass sie zu einer relativ schnellen Verschmutzung des Öls führen können.

Bei herkömmlichen Motorrädern ist auch der Rahmen üblicherweise relativ aufwendig gestaltet. Die Rahmenverbindung zwischen dem Lenkkopf und der hinter der Getriebeabtriebswelle liegenden Schwingenachse muss an dem relativ groß bauenden Kupplungskorb vorbeigeführt werden. Bei herkömmlichen Motorrädern, bei denen die Schwingenachse hinter dem Antriebsritzel angeordnet ist, weist der Rahmen üblicherweise Rahmenrohre auf, die sich unterhalb des Motors am Kupplungsgehäuse vorbei zu den Schwingenanlenkpunkten erstrecken. Derartige Rahmenkonstruktionen implizieren einen ungünstigen Kraftfluss und sind auch relativ schwer und in der Herstellung teuer. Bei derartigen Rahmen gestaltet sich auch die Motormontage relativ schwierig, da der Motor und das Getriebe sehr eng in den Rahmen "eingebettet" sind.

Bereits vor vielen Jahrzehnten wurde erkannt, dass es von Vorteil wäre, wenn man das Antriebsritzel, das zum Antrieb der Kette bzw. des Antriebsriemens vorgesehen ist, koaxial zur Schwingenachse anordnen würde. Konzeptartige Ansätze sind beispielsweise in der US 6 755 272 B2, GB 558 387, FR 2370 625, WO 02/094649 A1 oder der EP 592 655 B1 beschrieben. Bei den dort beschriebenen Motorrädern sitzt das Antriebsritzel aber nicht auf der Getriebeausgangswelle, sondern auf einer separaten Welle, welche über einen Ketten- oder Riemenantrieb von der Getriebeausgangswelle angetrieben wird. Dies ist konstruktiv relativ umständlich und hat sich daher auch nicht durchgesetzt.

In dem von Jürgen Stoffregen verfassten Lehrbuch ,,Motorradtechnik, 5. Auflage, Vieweg-Verlag, ATZ MTZ-Fachbuch, Seite 295 - 298 ist ebenfalls die Grundidee beschrieben, das Kettenritzel koaxial zur Schwingenachse anzuordnen. Eine konkrete Beschreibung, wie das Kettenritzel angetrieben werden könnte, und wie das Kettenritzel in Bezug auf das Getriebe angeordnet sein soll, liefert Stoffregen jedoch nicht.

Zum technischen Hintergrund kann auch noch die FR 1038 140 gezählt werden.

Aufgabe der Erfindung ist es, ein völlig neues und konstruktiv einfach realisierbares Fahrzeugkonzept zu schaffen, welches es ermöglicht die eingangs beschriebenen Probleme zu vermeiden, sowie eine Motor-/Getriebeeinheit als Basis für ein solches Fahrzeug zu schaffen.

Diese Aufgabe wird durch die Merkmale der Patentansprüche 1 und 45 gelöst. Vorteilhafte

Ausgestaltungen und Weiterbildungen der Erfindung sind den Unteransprüchen zu entnehmen.

Ausgangspunkt der Erfindung ist die Überlegung, eine neuartige Motor-/Getriebeeinheit zu schaffen, die ein entsprechend neuartiges Fahrzeug-, insbesondere ein neuartiges Motorradkonzept, ermöglicht. Eine solche Motor-/Getriebeeinheit weist einen Motor mit einer Kurbelwelle auf, die sich quer zur Fahrtrichtung des Fahrzeugs erstreckt, sowie ein Getriebe und eine Kupplung, die einen geöffneten Zustand und einen geschlossenen Zustand einnehmen kann, wobei die Kupplung im geschlossenen Zustand eine Drehmomentübertragung von der Kurbelwelle auf das Getriebe ermöglicht. Ein zentrales Merkmal dieser neuartigen Motor-/Getriebeeinheit besteht darin, dass die Kupplung koaxial zur Kurbelwelle angeordnet ist. Die Drehachse, um die die Kupplungsscheiben drehen, ist also quer zur Fahrtrichtung des Fahrzeugs bzw. des Motorrads.

Durch die koaxiale Anordnung von Kurbelwelle und Kupplung ergibt sich der Vorteil, dass die Kupplung - im Unterschied zu herkömmlichen FahrzeugMotor-/Getriebeeinheiten, bei denen die Kupplung üblicherweise auf der Getriebeeingangswelle angeordnet ist - bei höheren Drehzahlen und geringeren Drehmomenten arbeitet und somit kompakter ausgeführt sein kann. Die Kupplung kann also einen vergleichsweise kleinen Durchmesser haben, was wiederum den Vorteil hat, dass sie sich nicht bis in den Bereich der Getriebeausgangswelle erstreckt. Weshalb dies mit Blick auf das Gesamtfahrzeugkonzept so vorteilhaft ist, wird später noch näher erläutert.

Ausdrücklich sei darauf hingewiesen, dass die Erfindung nicht auf die Verwendung einer solchen Motor-/Getriebeeinheit in Motorrädern beschränkt ist, sondern ganz allgemein im Zusammenhang mit Fahrzeugen anwendbar ist. Die folgende Beschreibung und die Patentansprüche sollen außer Motorräder auch mehrrädrige Fahrzeuge umfassen, wie z.B. Dreiräder oder vierrädrige Fahrzeuge, insbesondere sogenannte "Quads".

Nach einer Weiterbildung der Erfindung weist das Fahrzeug einen Rahmen, und eine Hinterradschwinge auf, die auf einer Schwingenachse schwenkbar in Bezug auf den Rahmen angeordnet ist, und ein Getriebe mit einem Getriebegehäuse und einer aus dem Getriebegehäuse herausstehenden Getriebeausgangswelle. Auf der Getriebeausgangswelle ist ein "Getriebeausgangsritzel" angeordnet, welches über ein Zugmittel, wie z. B. über eine Kette oder einen Zahnriemen, mit einem im Hinterradbereich des Fahrzeugs angeordneten Kettenrad gekoppelt ist, welches ein Hinterrad bzw. Hinterräder des Fahrzeugs antreibt.

Nach einer Weiterbildung der Erfindung ist das auf der Getriebeausgangswelle angeordnete Getriebeausgangsritzel koaxial zur Schwingenachse angeordnet. Eine koaxiale Anordnung des Getriebeausgangsritzels, d. h. des Ritzels, welches die Kette bzw. den Riemen antreibt, und der Schwingenachse hat den Vorteil, dass für das Einfedern der Hinterradschwinge praktisch kein Durchhang des "Zugmittels", d. h. der Antriebskette bzw. des Antriebsriemens vorgehalten werden muss, wie dies bei herkömmlichen Motorrädern mit Ketten- bzw. Riemenantrieb der Fall ist. Die mit einem Kettendurchhang verbundenen Probleme werden also ursächlich vermieden.

Nach einer Weiterbildung der Erfindung ist vorgesehen, dass sich die Schwingenachse, d. h. die Schwenkachse, um welche die Hinterradschwinge schwenkt, durch das Getriebe-/Motorgehäuse hindurch erstreckt. Wenn im Folgenden von "Motor-/Getriebegehäuse" bzw. von Getriebegehäuse" bzw. von "Motorgehäuse" die Rede ist, so sind diese Begriffe jeweils breit auszulegen. Unter den Begriffen Motor-/Getriebegehäuse" bzw. Getriebegehäuse" bzw. "Motorgehäuse" sind in der folgenden Beschreibung und in den Patentansprüchen ganz allgemein das Gehäuse des Getriebes und/oder das Gehäuse des Motors zu verstehen.

Die sich durch das Getriebegehäuse hindurch erstreckende Schwingenachse steht auf einander gegenüberliegenden Seiten des Getriebegehäuses aus dem Getriebegehäuse heraus. Enden der Schwingenachse können dann schwenkbar im Rahmen des Fahrzeugs gelagert sein. Die Schwingenachse kann durch Wälzlager oder durch Gleitlager im Rahmen gelagert sein. Für die Lagerung der Schwingenachse im Rahmen können beispielsweise Kegelrollenlager verwendet werden. Die Kegelrollenlager können beispielsweise in O-Anordnung angeordnet werden.

Ausdrücklich sei darauf hingewiesen, dass die Schwinge nicht notwendigerweise im Rahmen gelagert sein muss. Die Schwinge kann auch mittels Lager, z.B. Nadellager an bzw. auf der Getriebeausgangswelle gelagert sein, sofern die Getriebeausgangswelle und das Motor-/Getriebegehäuse hinreichend stabil ausgeführt sind, um die von über die Schwinge eingeleiteten Kräfte abzustützen.

Die Hinterradschwinge kann fest mit der Schwingenachse verbunden sein. Eine einfache Möglichkeit besteht darin, die Hinterradschwinge mittels einer Klemmverbindung auf der Schwingenachse festzuklemmen.

Die Getriebeausgangswelle, auf der das Getriebeausgangsritzel angeordnet ist, ist im Getriebegehäuse vorzugsweise durch Wälzlager gelagert.

Nach einer Weiterbildung der Erfindung ist vorgesehen, dass die Getriebeausgangswelle als Hohlwelle ausgebildet ist. Dies hat den Vorteil, dass die Schwingenachse ganz einfach durch die Getriebeausgangswelle hindurch gesteckt werden kann, was eine sehr einfache Montage und Demontage der Hinterradschwinge ermöglicht.

Wie bereits erwähnt, kann die Motor-/Getriebeeinheit so in ein Fahrzeug eingebaut werden, dass sich die Kurbelwelle des Motors in einer Querrichtung, d. h. parallel zur Schwingenachse des Fahrzeugs erstreckt. Im Unterschied zu den meisten herkömmlichen Fahrzeugen bzw. Motorrädern, bei denen die Kupplung auf der Getriebeeingangswelle angeordnet ist, ist gemäß der Erfindung vorgesehen, dass die Kupplung koaxial zur Kurbelwelle angeordnet und vorzugsweise auf der Kurbelwelle selbst angeordnet ist. Da an der Kurbelwelle höhere Drehzahlen und kleinere Drehmomente auftreten als an der Getriebeeingangswelle, kann die Kupplung kleiner, d. h. mit einem geringeren Durchmesser ausgeführt sein, als bei herkömmlichen Motorrädern.

Bei herkömmlichen Motorrädern, bei denen die Kupplung auf der Getriebeeingangswelle angeordnet ist, überdeckt die Kupplung, in einer Seitenansicht des Fahrzeugs gesehen, die Getriebeausgangswelle. Bei herkömmlichen Motorrädern wäre also eine koaxiale Anordnung von Schwingenachse und Getriebeausgangsritzel überhaupt nicht möglich, da die Schwingenachse die Kupplung durchsetzen würde.

Demgegenüber hat eine Anordnung der Kupplung auf der Kurbelwelle den Vorteil, dass die Kupplung kompakter ausgeführt werden kann und dass sie, in einer Seitenansicht des Fahrzeugs gesehen, die Getriebeausgangswelle nicht überdeckt und somit ein "Durchstecken" der Schwingenachse ermöglicht. Da an der Kurbelwelle geringere Drehmomente auftreten als an der Getriebeeingangswelle können unterschiedliche Arten von Kupplungen verwendet werden, z. B. Einscheibenkupplungen, Mehrscheibenkupplungen, Trockenkupplungen, Nasskupplungen etc.

Ein "Antriebselement" der Kupplung ist vorzugsweise drehfest mit der Kurbelwelle verbunden. Ein "Abtriebselement" der Kupplung ist drehbar in Bezug zur Kurbelwelle angeordnet und mit einem auf der Kurbelwelle drehbar gelagerten Primärritzel verbunden. Bei dem Abtriebselement kann es sich um einen Kupplungskorb handeln, der einstückig mit dem Primärritzel verbunden sein kann. Alternativ dazu können der Kupplungskorb und das Primärritzel auch zweiteilig ausgeführt sein. Das Primärritzel kann mittels eines Wälzlagers oder eines Gleitlagers auf der Kurbelwelle gelagert sein. Vorzugsweise ist das Primärritzel mittels eines Nadellagers auf der Kurbelwelle gelagert.

Es kann vorgesehen sein, dass das Drehmoment von dem auf der Kurbelwelle sitzenden Primärritzel über ein auf einer Zwischenwelle angeordnetes Zwischenrad auf die Getriebeeingangswelle übertragen wird. Das Zwischenrad oder ein anderes auf der Zwischenwelle sitzendes Zahnrad kämmt dann mit einem Zahnrad der Getriebeeingangswelle, die in Richtung der Hinterradschwinge versetzt in Bezug auf die Zwischenwelle angeordnet ist. Auf der Getriebeeingangswelle und auf der Getriebeausgangswelle sind nebeneinander mehrere permanent in Eingriff befindliche schaltbare Zahnradstufen angeordnet, über die die einzelnen Gänge des Getriebes geschaltet werden können.

Das oben beschriebene Grundprinzip der Erfindung ermöglicht im Unterschied zum Stand der Technik auch eine optimale Gestaltung des Rahmens, insbesondere im Falle eines Motorrads eine optimale Gestaltung des Motorrad rahmens.

Nach einer Weiterbildung der Erfindung weist der Rahmen mindestens zwei linke und zwei rechte Rahmenrohre auf. Die linken Rahmenrohre sind im wesentlichen spiegelgleich zu den rechten Rahmenrohren. Die Rahmenrohre einer jeden Rahmenseite schneiden einander. "Schneiden" bedeutet in diesem Zusammenhang, dass sie zusammenlaufen und miteinander verbunden sind. Vorzugsweise ist der Rahmen so gestaltet, dass sich die Schwingenachse durch den "Schnittpunkt" der linken Rahmenrohre und durch den Schnittbund der rechten Rahmenrohre erstreckt. Der Motor und das Getriebe des Fahrzeugs können im Bereich zwischen den linken und den rechten Rahmenrohren angeordnet sein.

Die linken und die rechten Rahmenrohre können begrifflich jeweils in ein linkes und ein rechtes unteres Rahmenrohr und ein linkes und ein rechtes oberes Rahmenrohr differenziert werden. In einer Seitenansicht des Fahrzeugs gesehen, kann vorgesehen sein, die beiden unteren Rahmenrohre im wesentlichen gerade sind und sich von der Schwingenachse nach vorne oben in einen Bereich unterhalb eines Lenkers des Fahrzeugs erstrecken und dort beispielsweise mit einem Lenkkopflagerrohr verbunden sind. In einer Draufsicht auf das Fahrzeugs sind die beiden unteren Rahmenrohre nicht notwendigerweise gerade, sondern können auch gebogen sein.

Die beiden oberen Rahmenrohre sind oberhalb der unteren Rahmenrohre angeordnet und erstrecken sich von einem Bereich unterhalb des Lenkers bzw. von einem Lenkkopflagerrohr zur Schwingenachse nach hinten unten.

Ein derart gestalteter Rahmen hat mehrere Vorteile. So kann der Motor, das Getriebe und ein Kühler des Motorrads als vormontierte Baugruppe von unten her in den Bereich zwischen die linken und die rechten Rahmenrohre eingesetzt werden, was die Montage bzw. Demontage erheblich vereinfacht.

Während sich bei herkömmlichen Motorrädern mit Kettenantrieb die Rahmenrohre vom Lenkerbereich unterhalb des Motors bzw. des Getriebes zum Schwingenlager der Hinterradschwinge erstrecken, laufen die linken und die rechten Rahmenrohre des Rahmens gemäß der Erfindung seitlich am Motor bzw. am Getriebe vorbei vom Lenkerbereich schräg nach unten zur Schwingenachse. Dies wiederum hat den Vorteil, dass in einem Bereich unterhalb der unteren Rahmenrohre und vorderhalb des Motors ein durchgehender Kühler angeordnet werden kann.

Ein Luftfilter des Motors kann sehr platzsparend und vor Spritzwasser geschützt im lenkernahen Bereich zwischen den oberen und unteren Rahmenrohren oberhalb des Motors angeordnet werden.

Eine Bordbatterie des Motorrads kann in einem schwingenachsennahen Bereich zwischen den oberen und unteren Rahmenrohren oberhalb des Getriebes angeordnet sein. Vorzugsweise befindet sich in diesem Bereich der Schwerpunkt des Fahrzeugs. Eine Anordnung der relativ schweren Bordbatterie im Bereich des Schwerpunkts des Fahrzeugs verbessert das Handling des Fahrzeugs ganz erheblich.

Der oben beschriebene Rahmen hat auch wesentliche Vorteile hinsichtlich der Anordnung eines Federbeins. Das Federbein kann zwischen dem Rahmen und der Hinterachsschwinge angeordnet sein. Es hat die Aufgabe, während der Fahrt auftretende Bewegungen des Federbeins zu federn und zu dämpfen. Ein unteres Ende des Federbeins kann gelenkig mit der Schwinge verbunden sein. Ein oberes Ende des Federbeins kann gelenkig mit dem Rahmen verbunden sein. Das Federbein erstreckt sich dann von hinten unten nach schräg vorne oben.

Bei der oben beschriebenen Rahmenkonstruktion ist es vorteilhaft, das Federbein so anzuordnen, dass es, in einer Seitenansicht des Motorrads gesehen, in einer im wesentlichen geraden Verlängerung zu den vorderen Abschnitten der oberen beiden Rahmenrohren steht. Bei einer derartigen Anordnung werden die vom Federbein auf dem Rahmen ausgeübten Kräfte im wesentlichen in Längsrichtung der vorderen Abschnitte der oberen Rahmenrohre in den Rahmen eingeleitet. Die oberen Rahmenrohre fungieren dabei als "Druckstäbe" und werden beim Einfedern der Hinterradschwinge primär auf Druck und nur wenig auf Biegung beansprucht. Im Unterschied zu herkömmlichen Motorrädern ermöglicht der Rahmen also einen wesentlich flacheren Einbau der Federbeinstütze, was beim Einfedern des Federbeins eine hohe Progression ermöglicht.

Auch der Kraftstofftank kann bei dem oben beschriebenen Fahrzeugkonzept in einer günstigeren, schwerpunktnäheren Position angeordnet werden als dies bei den meisten herkömmlichen Fahrzeugen bzw. Motorrädern der Fall ist. Nach einer Weiterbildung der Erfindung ist der Kraftstofftank in einem Bereich oberhalb des Federbeins und unterhalb der Sitzbank des Fahrzeugs angeordnet. Der Tankdeckel des Kraftstofftanks kann an der Oberseite des Kraftstofftanks unterhalb der Sitzbank angeordnet sein. Zum Betanken braucht dann lediglich die Sitzbank abgenommen werden. Im Vergleich zu herkömmlichen Motorrädern, bei denen der Kraftstofftank vorderhalb der Sitzbank angeordnet ist, hat eine Anordnung im Bereich oberhalb des Federbeins den Vorteil, dass sich dadurch der Schwenkpunkt des Fahrzeugs absenken lässt, was das Handling weiter verbessert.

Alternativ dazu kann in der Sitzbank auch eine Zugangsöffnung bzw. ein "Loch" vorgesehen sein, über die bzw. über das der Tankstutzen des Kraftstofftanks zugänglich ist. Eine Betankung ist dann auch ohne ein Abnehmen der Sitzbank möglich.

Im folgenden wird die Erfindung im Zusammenhang mit der Zeichnung näher erläutert. Es zeigen:
- Figur 1: eine Seitenansicht eines Motorrads gemäß der Erfindung;
- Figur 2: die Kurbelwelle und die Kupplung eines Motorrads gemäß der Erfindung;
- Figur 3: eine Seitenansicht des Motors und des Getriebes eines Motorrads gemäß der Erfindung;
- Figur 4: einen Schnitt entlang der in Figur 3 gezeigten Schnittlinie A-A;
- Figur 5: einen Querschnitt durch die Schwingenachse, die Getriebeabtriebswelle und die Hinterachsschwinge des Motorrads;
- Figur 6: eine perspektivische Ansicht eines schematisiert dargestellten Motorrads gemäß der Erfindung;
- Figur 7: eine Seitenansicht eines schematisiert dargestellten Motorrads gemäß der Erfindung;
- Figur 8: eine Draufsicht auf ein Motorrad gemäß der Erfindung;
- Figur 9: die Hinterradschwinge und das daran gelagerte Hinterrad eines Motorrads gemäß der Erfindung;
- Figur 10: ein Ausführungsbeispiel gemäß der Erfindung im Bereich der Kurbelwelle bzw. Kupplung in Schnittdarstellung;
- Figur 11: eine Schnittdarstellung der Kupplung des Ausführungsbeispiels der Figur 10;
- Figur 12: eine Detailzeichnung des Bereichs X der Figur 11;
- Figur 13: ein Ausführungsbeispiel einer Kupplung gemäß der Erfindung, wobei in den Kupplungsdeckel ein mit dem Nehmerzylinder verbundener Hydraulikanschluss integriert ist;
- Figur 14: eine Detailzeichnung der auf der Kurbelwelle angeordneten Kupplung;
- Figur 15: eine Schnittdarstellung einer Motor-/Getriebeeinheit gemäß der Erfindung;
- Figur 16-19: den zwischen dem Primärritzel und der Getriebeeingangswelle angeordneten Zwischentrieb.

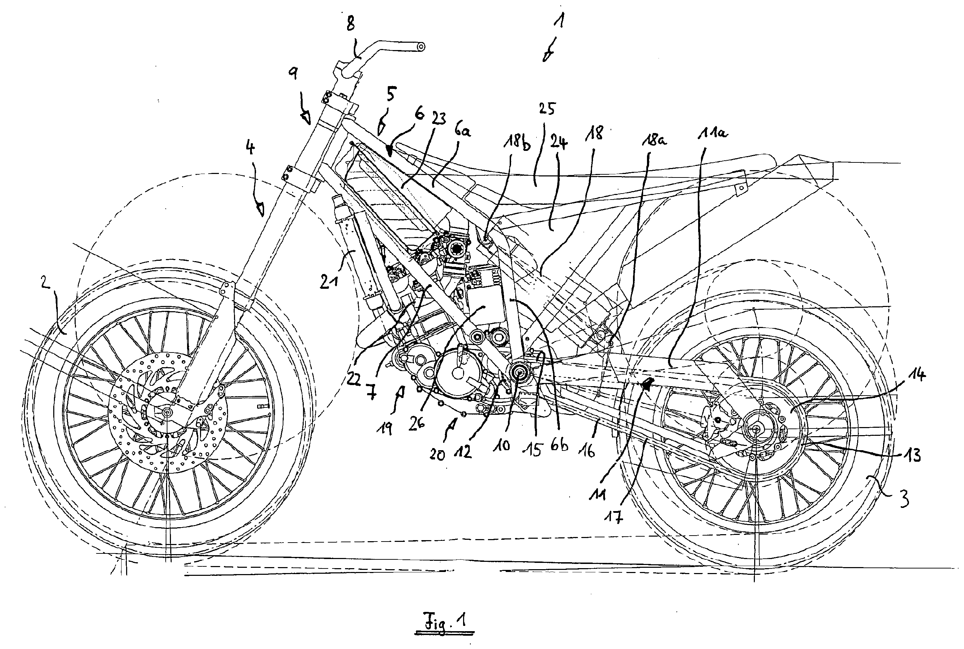

Figur 1 zeigt ein Motorrad 1 mit einem Vorderrad 2 und einem Hinterrad 3. Das Vorderrad 2 ist über eine Teleskopgabel 4 mit einem Rahmen 5 des Motorrads 1 verbunden. In der in Figur 1 dargestellten Seitenansicht sind von dem Rahmen 5 ein oberes linkes Rahmenrohr 6 und ein unteres linkes Rahmenrohr 7 zu erkennen. Das obere linke Rahmenrohr 6 kann in einen vorderen Abschnitt 6a und einen hinteren Abschnitt 6b unterteilt werden. Im Übergangsbereich zwischen den Rahmenrohrabschnitten 6a, 6b ist das obere linke Rahmenrohr 6 gebogen. Der vordere Abschnitt 6a ist in der in Figur 1 gezeigten Seitenansicht im Wesentlichen gerade. Das untere linkere Rahmenrohr 7 ist in der in Figur 1 gezeigten Seitenansicht ebenfalls im Wesentlichen gerade. Die beiden Rahmenrohre 6, 7 erstrecken sich von einem Bereich unterhalb eines Lenkers 8 von einem Lenkkopflager 9 schräg nach hinten unten. Der Abschnitt 6b des oberen linken Rahmenrohrs 6 "schneidet" das untere linke Rahmenrohr 7.

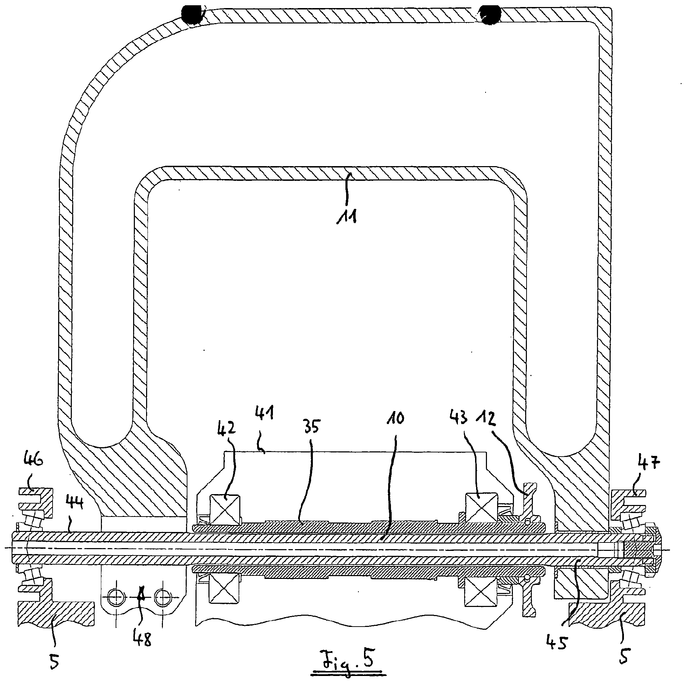

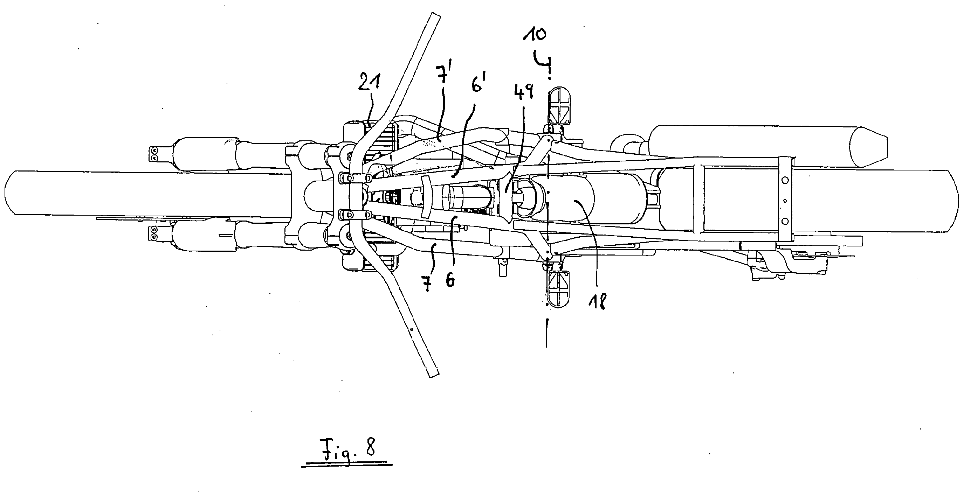

Wie am besten aus Figur 8 ersichtlich ist, ist der Rahmen 5 bezüglich einer Mittellängsachse des Motorrads im Wesentlichen symmetrisch aufgebaut. Der Rahmen weist also ein dem oberen linken Rahmenrohr 6 entsprechendes oberes rechtes Rahmenrohr 6' und einem dem unteren linken Rahmenrohr 7 entsprechendes unteres rechtes Rahmenrohr 7' auf. Durch die "Schnittpunkte" der Rahmenrohre 6, 7 bzw. 6', 7' erstreckt sich eine Schwingenachse 10, die in Figur 8 gestrichelt dargestellt ist. Die Schwingenachse 10 ist am besten aus Figur 5 ersichtlich. An der Schwingenachse 10 ist die Hinterradschwinge 11 (vgl. Figur 5) befestigt. Die Hinterradschwinge 11 ist also über die Schwingenachse 10 schwenkbar in Bezug auf den Rahmen 5 angeordnet. Wie ebenfalls am besten aus Figur 5 ersichtlich ist, ist koaxial zur Schwingenachse 10 ein Getriebeausgangsritzel 12 angeordnet, welches eine Kette 13 des Motorrads antreibt. Das Getriebeausgangsritzel 12 ist über die Kette 13 mit einem Kettenrad 14 gekoppelt, welches das Hinterrad 3 antreibt.

Wie aus Figur 1 ersichtlich ist, ist der Oberzug 11a der Hinterradschwinge hohl. Ein Zugtrum 15 der Kette 13 erstreckt sich durch den Oberzug 11a der Hinterradschwinge 11. Das Obertrum 11a dient also zugleich als Kettenschutz. Ein Untertrum 16 der Kette 13 läuft durch einen Schlauchmantel 17 und ist somit ebenfalls geschützt.

Es sei ausdrücklich darauf hingewiesen, dass die Kette nicht notwendigerweise den Oberzug der Hinterradschwinge hindurchgeführt sein muss, sondern auch "außerhalb" angeordnet sein kann.

Zwischen dem Rahmen 5 und der Hinterradschwinge 11 ist ein Federbein 18 angeordnet. Wie aus Figur 1 ersichtlich ist, ist das Federbein 18 im Vergleich zu herkömmlichen Motorrädern relativ flach angeordnet. Ein hinteres unteres Ende 18a des Federbeins 18 ist gelenkig mit der Hinterradschwinge 11 verbunden. Ein vorderes oberes Ende 18b des Federbeins 18 ist gelenkig mit einem hier nicht näher dargestellten Querrohr des Rahmens 5 verbunden. Wie aus Figur 1 ersichtlich ist, steht das Federbein 18 in der hier dargestellten Seitenansicht des Motorrads im Wesentlichen in einer geraden Verlängerung zu den oberen Rahmenrohr 6. Dadurch ergibt sich eine sehr günstige Krafteinleitung in den Rahmen 5. Die oberen Rahmenrohre 6, 6' (vgl. Figur 8) werden dabei also primär auf Druck beansprucht. Aufgrund der relativ "flachen" Anordnung des Federbeins 18 ergibt sich beim Einfedern das Hinterrads 3 auch eine relativ hohe Federprogression, was sich ebenfalls günstig auf das Fahrverhalten des Motorrads 1 auswirkt. Die Federprogression ist wesentlich höher als bei herkömmlichen Motorrädern, bei denen das Federbein steiler eingebaut ist.

Wie aus Figur 1 ersichtlich ist, ist der Rahmen 5 des Motorrads 1 nach unten im Wesentlichen offen. Dies hat den Vorteil, dass der Motor 19, das Getriebe 20 und ein Kühler 21 als "vormontierte Powerunit" bei der Montage des Motorrads 1 in einfacher Weise von unten in den Rahmen 5 eingesetzt werden können, was den Montagaufwand im Vergleich zu herkömmlichen Motorrädern, bei denen sich unterhalb des Motors bzw. des Getriebes Rahmenrohre erstrecken, wesentlich vereinfacht.

Die oben beschriebene Rahmenkonzeption in Verbindung mit der koaxialen Anordnung der Schwingenachse 10 und des Getriebeausgangsritzels 12 ermöglicht eine Einbauposition des Motors 19 und des Getriebes 20, bei der der Motor 19 im Vergleich zu herkömmlichen Motorrädern ein Stück weiter hinten angeordnet ist und der Zylinder des in Figur 1 dargestellten Einzylindermotors sich vergleichsweise flach nach vorne oben erstreckt.

Im Bereich unterhalb des Lenkers 8, hinter dem Lenkkopflager 9 und zwischen den oberen Rahmenrohren 6, 6' und den unteren Rahmenrohren 7, 7' ist eine sogenannte "Airbox" angeordnet, welche einen Luftfilter beinhaltet, über den der Motor 19 mit Ansaugluft versorgt wird. Da die Airbox relativ leicht ist und somit das Handling des Motorrads nur wenig beieinträchtigt, ist sie relativ weit oben am Motorrad 1 angeordnet, etwa dort, wo sich bei herkömmlichen Motorrädern der Tank befindet.

Aufgrund der relativ flachen Position des Federbeins 18 kann der Kraftstofftank in einer günstigen, schwerpunktnäheren Position angeordnet werden, als dies bei den meisten herkömmlichen Motorrädern der Fall ist. Der Kraftstofftank 24 befindet sich in einer Position oberhalb des Federbeins 18 und unterhalb einer Sitzbank 25 des Motorrads 1. Der Kraftstofftank 24 ist also relativ nahe des Schwerpunkts des Motorrads, der in etwa im Bereich des Federbeins 18 liegt, angeordnet. Durch die schwerpunktnahe Anordnung des Kraftstofftanks 24 verbessert sich das Handling des Motorrads 1.

Eine weitere relativ schwere Fahrzeugkomponente ist die Bordbatterie 26. Die Bordbatterie 26 ist in einem Bereich schräg oberhalb bzw. vorderhalb der Schwingenachse 10 zwischen den oberen Rahmenrohren 6, 6' und den unteren Rahmenrohren 7, 7' und somit ebenfalls in der Nähe des Schwerpunkts des Motorrads angeordnet, was das Handling weiter verbessert. Die Bordbatterie kann insbesondere "hinter" der Motor-/Getriebeeinheit angeordnet sein. "Hinter" bedeutet in diesem Zusammenhang allgemein im Bereich zwischen der Motor-/Getriebeeinheit und dem Hinterrad bzw. den Hinterrädern des Fahrzeugs. Die Bordbatterie kann insbesondere unterhalb des Kraftstofftanks angeordnet sein.

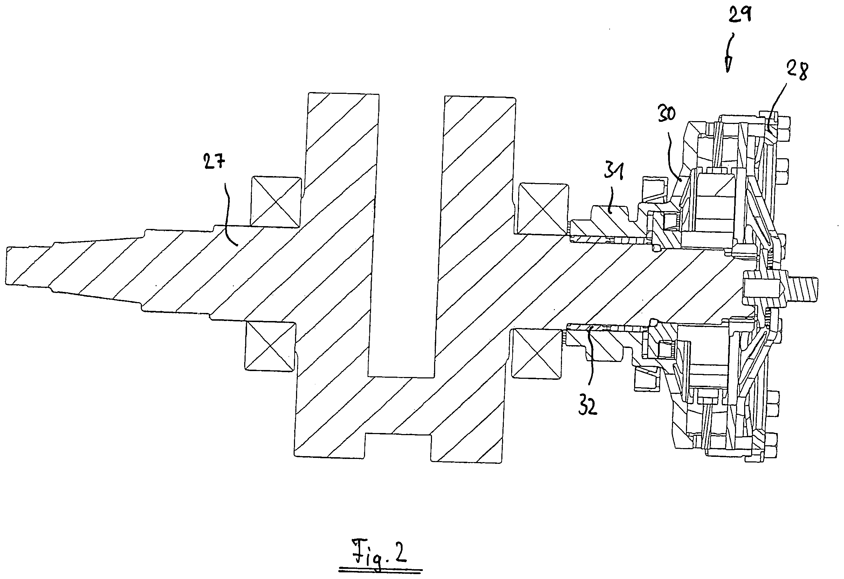

Der Motor 19 des Motorrads 1 ist so eingebaut, dass sich die Kurbelwelle 27 (vgl. Figur 2) in Querrichtung des Motorrads, d. h. senkrecht zur Zeichenebene der Figur 1 und parallel zur Schwingenachse 10 erstreckt. Der Begriff "Querrichtung" kann auch so interpretiert werden, dass die Kurbelwelle quer zur Hauptfahrrichtung und somit quer zur Längsrichtung des Motorrads ist. Die Kurbelwelle 27 ist am besten aus Figur 2 ersichtlich. In Figur 2 ist die Kurbelwelle eines Einzylindermotors dargestellt. Die Erfindung ist selbstverständlich auch für quer eingebaute Mehrzylindermotoren geeignet. Der Kolben (nicht dargestellt) des Motors überträgt eine Kolbenkraft und bewirkt dadurch eine Drehung der Kurbelwelle 27. Vom rechten Ende der in Figur 2 gezeigten Kurbelwelle 27 wird das Drehmoment auf ein Antriebselement 28 einer Mehrscheibenkupplung 29 übertragen.

Im Unterschied zu herkömmlichen Motorrädern, bei denen die Kupplung üblicherweise auf der Getriebeeingangswelle angeordnet ist, ist die Kupplung 29 auf der Kurbelwelle 27 angeordnet. Wenn die Kupplung 29 geschlossen ist, wird das Drehmoment von dem Antriebselement 28 auf einen als "Abtriebselement" fungierenden Kupplungskorb 30 übertragen, der hier einstückig mit einem Primärritzel 31 verbunden ist. Der Kupplungskorb muss natürlich nicht notwendigerweise einstückig mit dem Primärritzel verbunden sein. Denkbar ist an dieser Stelle auch eine Nietverbindung. Der Kupplungskorb 30 bzw. das Primärritzel 31 ist über ein Nadellager 32 auf der Kurbelwelle 27 gelagert.

Im Vergleich zu herkömmlichen Motorrädern, bei denen die Kupplung auf der Getriebeeingangswelle gelagert angeordnet ist, hat eine Anordnung auf der Kurbelwelle den Vorteil, dass dort geringere Drehmomente zu übertragen sind, was eine kompaktere Bauweise der Kupplung ermöglicht.

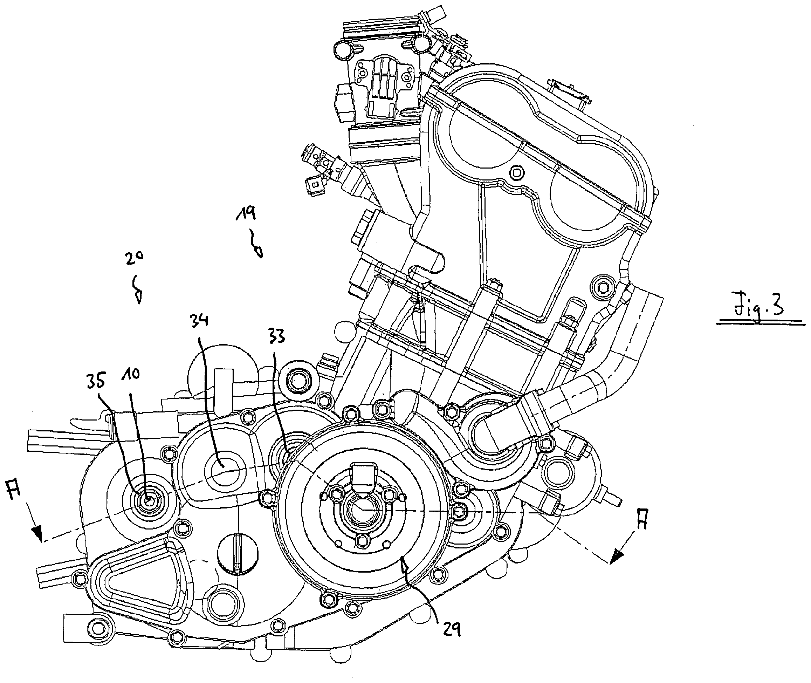

Figur 3 zeigt eine Seitenansicht der Motor-/Getriebeeinheit und zwar von der der in Figur 1 gezeigten Seite gegenüberliegenden Seite, d. h. von der "rechten" Seite des Motorrads 1 aus gesehen. Zu erkennen ist die Lage der Kupplung 29, einer Zwischenwelle 33, einer Getriebeeingangswelle 34 und der koaxial zur Schwingenachse 10 angeordneten Getriebeausgangswelle 35. Ferner ist eine Schnittlinie A-A dargestellt.

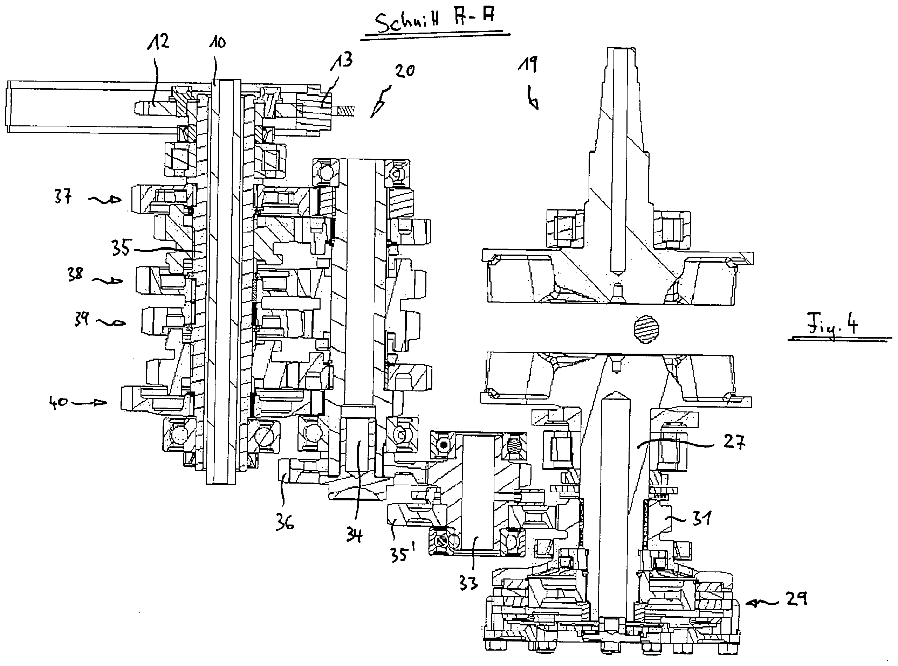

Figur 4 zeigt einen Schnitt durch die Motor-/Getriebeeinheit entlang der Schnittlinie A-A. Wie aus Figur 4 ersichtlich ist, wird das Drehmoment von der Kurbelwelle 27 über die Kupplung 29 auf das Primärritzel 31 übertragen und von dem Primärritzel 31 auf ein Zwischenzahnrad 35', das auf der Zwischenwelle 33 angeordnet ist. Ein mit dem Zwischenrad 35'drehfest verbundenes Zahnrad 80 kämmt mit einem Getriebeeingangsritzel 36, das auf der Getriebeeingangswelle 34 angeordnet ist. Auf der Getriebeeingangswelle 34 und auf der Getriebeausgangswelle 35 sind mehrere schaltbare Zahnradstufen 37 - 40 angeordnet, über die einzelne Gänge des Getriebes 20 geschaltet werden können. In Abhängigkeit von dem eingelegten Gang wird das Drehmoment über eine dieser Zahnradstufen 37 - 40 auf die Getriebeausgangswelle 35 und von dort über das Getriebeausgangsritzel 12 auf die mit dem Hinterrad 3 gekoppelte Kette 13 übertragen.

Wie am besten aus den Figuren 4 bzw. 5 ersichtlich ist, ist die Getriebeausgangswelle 35 eine Hohlwelle. Die Schwingenachse 10 ist durch die Getriebeausgangswelle hindurch gesteckt. Auf einer Seite des Getriebegehäuses 41 erstreckt die Getriebeausgangswelle 35 aus dem Getriebegehäuse 41 heraus. Auf dem herausstehenden Abschnitt der Getriebeausgangswelle 35 ist das Getriebeausgangsritzel 12 angeordnet. Die Getriebeausgangswelle 35 ist mittels zweier Wälzlager 42, 43 im Getriebegehäuse 41 gelagert.

Wie am besten aus Figur 5 ersichtlich ist, erstreckt sich die Schwingenachse 10 durch die Getriebeausgangswelle 35 hindurch und somit auch durch das Getriebegehäuse 41. Enden 44, 45 der Schwingenachse 10 stehen aus dem Getriebegehäuse 41 heraus und sind mittels zweier Kegelrollenlager 46, 47, die hier in O-Anordnung eingebaut sind, im Rahmen 5 des Motorrads 1 gelagert. Bei der Schwingenachse 10 handelt es sich also um eine "Steckachse" die eine einfache Montage und Demontage der Hinterradschwinge 11 ermöglicht.

Die Hinterradschwinge 11 ist mittels einer Klemmverbindung 48 auf der Schwingenachse 10 festgeklemmt und somit fest in Bezug auf die Schwingenachse 10 positioniert. Da die Schwingenachse 10 über die Kegelrollenlager 46, 47 im Rahmen 5 gelagert ist, kann die Hinterradschwinge 11 in Bezug auf den Rahmen 5 um die Schwingenachse 10 verschwenkt werden.

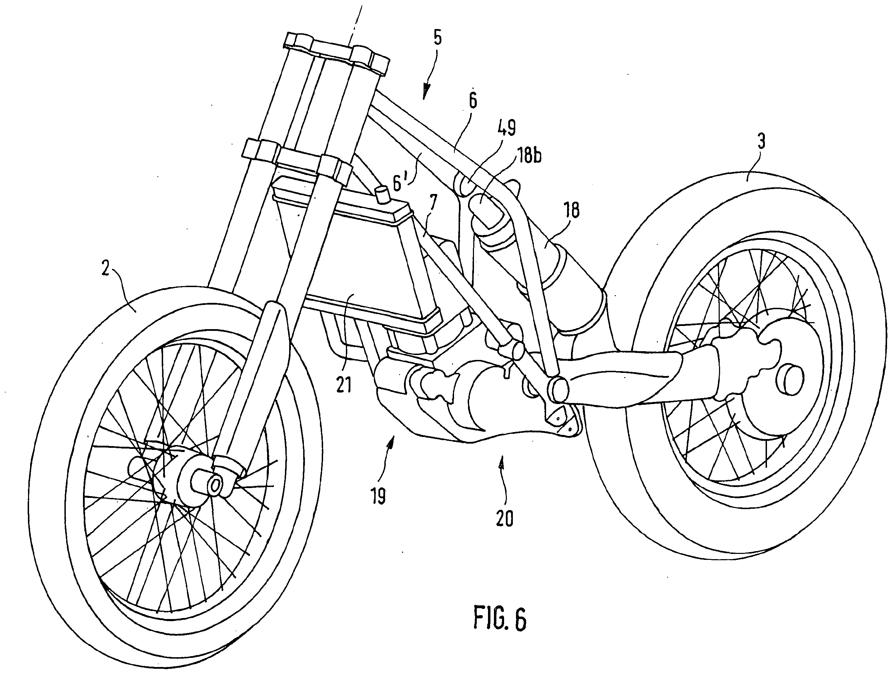

Figur 6 zeigt eine stark schematisierte Darstellung eines Motorrads 1 gemäß der Erfindung in perspektivischer Darstellung. In dieser Darstellung ist besonders gut der flache Einbau des Federbeins 18 zu erkennen. Das vordere Ende 18b des Federbeins 18 ist über eine die beiden oberen Rahmenrohre 6, 6' miteinander verbindenden Querstrebe 49 gelenkig mit dem Rahmen 5 verbunden. Wie bereits erwähnt ergibt sich durch die flache Anordnung des Federbeins 18 eine starke Federbeinprogression, was das Fahrverhalten des Motorrads im Vergleich zu herkömmlichen Motorrädern, bei denen das Federbein steiler eingebaut ist, erheblich verbessert.

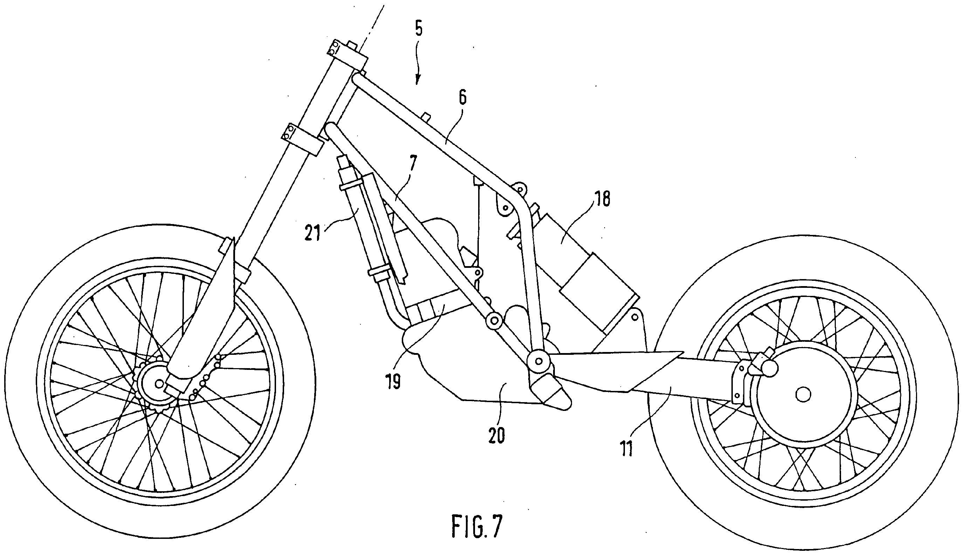

Figur 7 zeigt das Motorrad der Figur 6 in Seitenansicht. Auch hier ist nochmals sehr gut die flache Einbaulage des Federbeins 18 und die sehr einfache Bauweise des Rahmens 5 zu erkennen. Aus den Figuren 6, 7 ist auch sehr gut zu erkennen, dass der Motor 19, das Getriebe 20 und der Kühler 21 als vormontierte "Powerunit" bei der Montage des Motorrads 1 von unten her in den Rahmen 5 eingesetzt werden können, da sich im Unterschied zu herkömmlichen Motorrädern unterhalb des Motors 19 bzw. des Getriebes 20 keinerlei Rahmenrohre "nach hinten" zur Anlenkstelle der Hinterradschwinge erstrecken.

Wie aus den Figuren 6 und 8 ersichtlich ist, ermöglicht diese Rahmenkonzeption auch die Anordnung eines durchgehenden, d.h. einteiligen Kühlers 21 unterhalb der unteren Rahmenrohre 7, 7'.

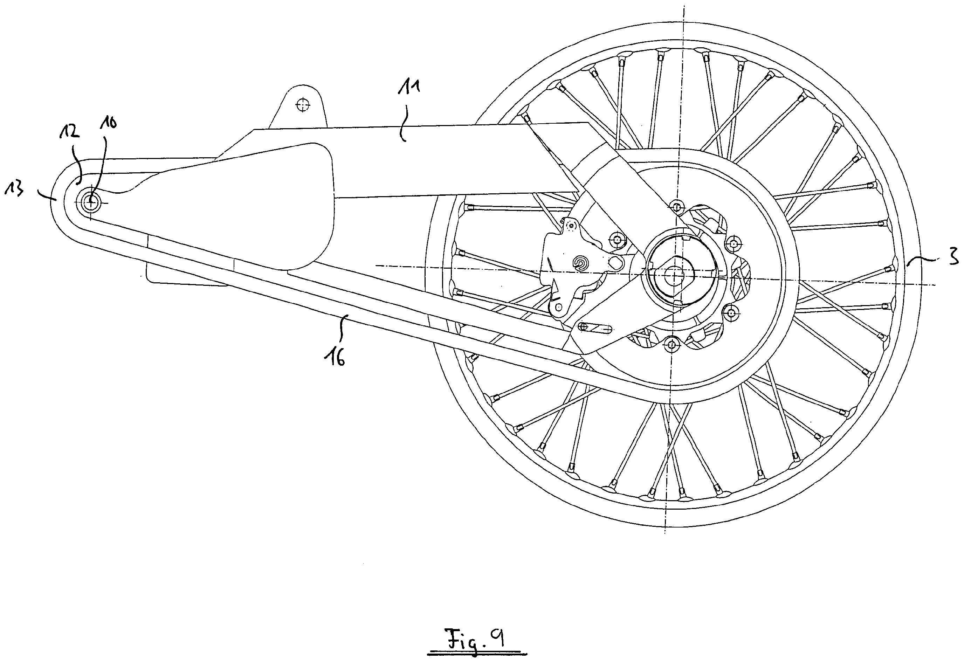

Figur 9 zeigt eine Seitenansicht der Hinterradschwinge 11 des Hinterrads 3 in vergrößerter Darstellung.

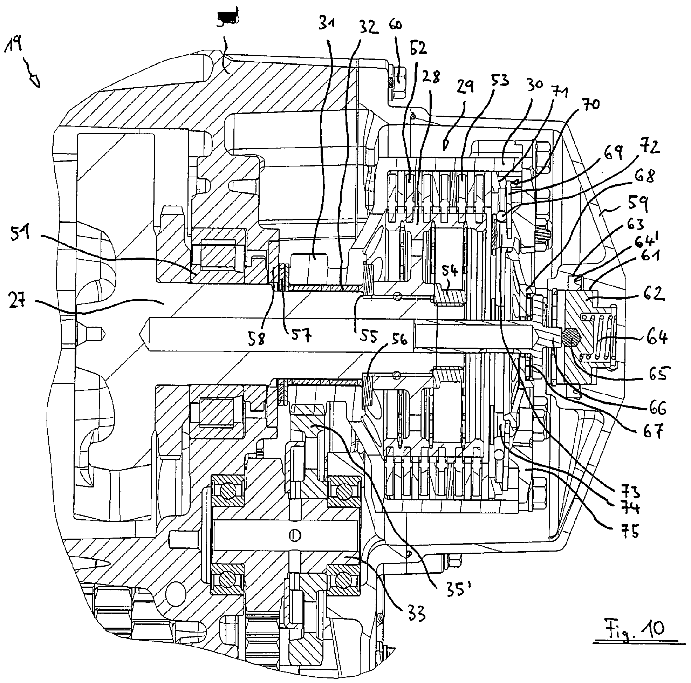

Figur 10 zeigt ein Ausführungsbeispiel eines Fahrzeugmotors 19 im Bereich der Kupplung. Der Motor 19 weist ein Motorgehäuse 50 auf, in dem die Kurbelwelle 27 durch Wälzlager 51 gelagert ist. Im Bereich des rechten Endes der Kurbelwelle 27 ist eine Kupplung 29 angeordnet, die bei dem hier gezeigten Ausführungsbeispiel als Lamellenkupplung ausgebildet ist. Die Lamellenkupplung 29 weist ein Antriebselement auf, das im Folgenden auch als "Innenteil" oder "Mitnehmerelement" 28 bezeichnet wird, und das bei dem hier gezeigten Ausführungsbeispiel über eine Keilverzahnung bzw. ein Kerbzahnprofil drehfest mit der Kurbelwelle 27 verbunden ist. Drehfest mit dem Antriebselement 28 sind mehrere radial innen aufgehängte Lamellen 52 verbunden, die zwischen äußere Lamellen 53 eingreifen, welche drehfest in einem Abtriebselement 30 der Kupplung angeordnet sind. Das Abtriebselement 30 wird im Folgenden auch als "Kupplungskorb" bezeichnet.

Der Kupplungskorb 30 ist einstückig mit dem Primärritzel 31 verbunden. Im Bereich des Primärritzels 31 ist der Kupplungskorb 30 mittels Nadellager 32 auf der Kurbelwelle 27 drehbar gelagert. In Axialrichtung, d. h. in Längsrichtung der Kurbelwelle 27 ist die Lamellenkupplung 29 folgendermaßen festgelegt. Das Antriebselement bzw. das Innenteil 28 ist mittels einer Wellenmutter 54 gegen einen Absatz 55 der Kurbelwelle verspannt.

Der Kupplungskorb 30 hingegen ist in Axialrichtung durch eine Scheibe 56 festgelegt, die zwischen das Innenteil 28 und den Absatz 55 eingespannt ist. In der entgegengesetzten Richtung stützt sich der Kupplungskorb 30 bzw. das einstückig damit verbundene Primärritzel über Axialnadellager 57 und eine Zwischenplatte bzw. Zwischenscheibe 58 am Gehäuse 50 des Motors 19 ab. Dies ist ein wesentlicher Unterschied gegenüber vielen herkömmlichen Kupplungsanordnungen, bei denen die Kupplung in Axialrichtung häufig über Wellenlagerungen abgestützt werden. Im Unterschied dazu werden beim Ausführungsbeispiel der Figur 10 die Kräfte, die beim Betätigen der Kupplung entstehen, nicht auf die Kurbelwelle 27 und damit nicht auf das Wälzlager 51 übertragen. Somit übt die Lamellenkupplung 29 praktisch keinen Einfluss auf den Lauf des Motors 19 bzw. des Kurbelwelle 27 aus.

Eine weitere Besonderheit des in Figur 10 gezeigten Ausführungsbeispiels ist darin zu sehen, dass der Kraftfluss nicht wie bei den meisten Lamellenkupplungen über den Kupplungskorb eingeleitet und über die Lamellen auf das Kupplungsinnenteil übertragen wird, sondern umgekehrt. Beim Ausführungsbeispiel der Figur 10 wird das Drehmoment von der Kurbelwelle auf das Innenteil 28 und über die Lamellen 52, 53 nach außen auf den Kupplungskorb und das einstückig damit verbundene Primärritzel 31 übertragen. Das Primärritzel 31 wiederum kämmt mit dem auf der Zwischenwelle 33 angeordneten Zwischenrad 35' eines "Zwischentriebs," über den das Drehmoment dann auf die Getriebeeingangwelle übertragen wird.

Wie aus Figur 10 ersichtlich ist, ist an das Gehäuse 50 des Motors 19 ein die Lamellenkupplung 29 überdeckender Kupplungsdeckel 59 angeflanscht und mittels Befestigungsschrauben 60 mit dem Gehäuse 50 verschraubt. In dem Kupplungsdeckel 59 ist eine zylindrische Ausnehmung 61 vorgesehen, die im Folgenden auch als "Nehmerzylinder" bezeichnet wird. In der zylindrischen Ausnehmung 61 ist ein Nehmerkolben 62 verschieblich angeordnet. Der Nehmerzylinder 61 weist eine umlaufende nutartige Ausnehmung 63 auf, in die eine Dichtung 64' eingesetzt ist, welche den Nehmerzylinder 61 gegenüber dem Nehmerkolben 62 abdichtet.

Die Anordnung der Dichtung 64' in der nutartigen Ausnehmung 63 des Nehmerzylinders 61 hat den Vorteil, dass die Abdichtung kostengünstiger realisierbar ist, als bei herkömmlichen Systemen, bei denen die Dichtung üblicherweise in den Kolben integriert ist. Bei herkömmlichen Anordnungen, bei denen die Dichtung in den Kolben integriert ist, muss das Außenteil, d. h. der Nehmerzylinder beschichtet werden, um einen Verschleiß zu vermeiden. Eine derartige Beschichtung des Nehmerzylinders ist relativ teuer. Bei dem in den Figuren 1 - 13 gezeigten Ausführungsbeispiel hingegen braucht der Nehmerzylinder 61 nicht beschichtet werden, sondern lediglich der Nehmerkolben 62, was wesentlich kostengünstiger ist.

Der Nehmerkolben 62 wird mittels einer Feder 64 in einer definierten Position gehalten, in der eine in den Nehmerkolben 62 eingesetzte Kugel 65 an einem Ausrückelement 66 anliegt. Mittels des Nehmerkolbens 62 kann über die Kugel 65, das Ausrückelement 66 und ein Axiallager 67 eine in Axialrichtung wirkende Druckkraft auf einen Ausrückring 68 übertragen werden, der zum Öffnen der Lamellenkupplung 29 vorgesehen ist.

Wenn der Nehmerkolben 62 nicht mit Druck beaufschlagt ist, wird die Lamellenkupplung 29 durch eine Tellerfeder 69 geschlossen gehalten. Die Tellerfeder 69 weist einen radial äußeren Bereich 70 auf, der gegen eine Druckplatte 71 drückt, welche im geschlossenen Zustand der Kupplung das Lamellenpaket zusammenpresst und somit das Innenteil 28 und den Kupplungskorb 30 reibschlüssig miteinander koppelt. Abgestützt wird die Tellerfeder 70 dabei durch einen sich in einer Umfangsrichtung des Kupplungskorbs 30 erstreckenden Ring 72.

Ein besonders zu erwähnendes konstruktives Merkmal des in Figur 10 gezeigten Ausführungsbeispiels ist darin zu sehen, dass die Tellerfeder 69, der Ring 72 und der Ausrückring 68 in konstruktiv sehr einfacher Weise fixiert und zentriert sind, nämlich über mehrere in Umfangsrichtung verteilt angeordnete Bundschrauben, von denen in Figur 10 lediglich zwei Bundschrauben 73, 74 zu sehen sind.

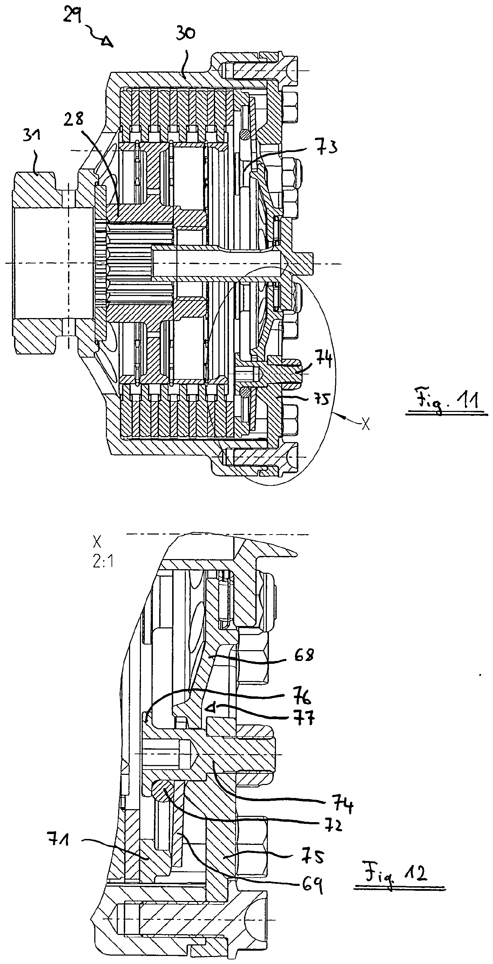

Wie am besten aus Figur 12 ersichtlich ist, sind die Bundschrauben 73, 74 mit einem deckelartigen Element 75 des Kupplungskorbs 30 verschraubt. Die Bundschrauben weisen an ihrem dem Inneren des Kupplungskorbs 30 zugewandten Ende einen umlaufenden Bund bzw. einen Absatz 76 auf. An den Absätzen 76 der Bundschrauben stützt sich der Ring 72 ab. Mittels der Bundschrauben 74 werden die Tellerfeder 69, der Ring 72 und der Ausrückring 68 zentriert.

Zum Öffnen der Kupplung, d. h. zum Entlasten des Tellerfederpakets der Lamellenkupplung 29 wird der Nehmerkolben 62 mit Druck beaufschlagt und nach links verschoben. Die vom Nehmerkolben 62 ausgeübte Öffnungskraft überträgt sich auf den Ausrückring 68, der ebenfalls nach links verschoben wird. Wie am besten aus Figur 12 ersichtlich ist, kommt ein radial äußerer Bereich 77 des Ausrückrings 68 zur Anlage mit einem radial inneren Bereich der Tellerfeder 69. Durch die von dem Ausrückring 68 auf die Tellerfeder 69 ausgeübte Axialkraft wird der radial innere Bereich der Tellerfeder in Figur 12 etwas nach links verschoben, was aufgrund der Anlage der Tellerfeder an dem Ring 72 dazu führt, dass der radial äußere Bereich der Tellerfeder 69 von der Druckplatte 71 abhebt, was zur Entlastung des Tellerfederpakets und somit zum Öffnen der Lamellenkupplung 29 führt.

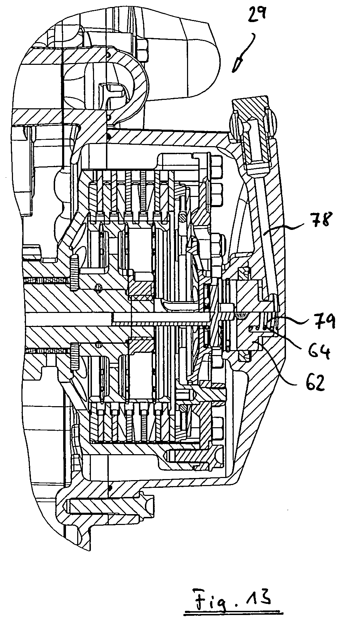

Figur 13 zeigt einen Schnitt durch die Lamellenkupplung 29 in einer anderen Schnittebene. Deutlich ersichtlich ist aus dieser Darstellung, dass in den Kupplungsdeckel 29 ein Hydraulikkanal 78 integriert ist, der in einen Raum 79 mündet, in dem die Feder 64 angeordnet ist. Über den Hydraulikkanal 78, der mit einer hier nicht näher dargestellten Betätigungseinrichtung verbunden ist, z. B. einer am Motorradlenker angeordneten Handarmatur, die als "Geber" fungiert, kann der Nehmerkolben 62 mit Druck beaufschlagt werden.

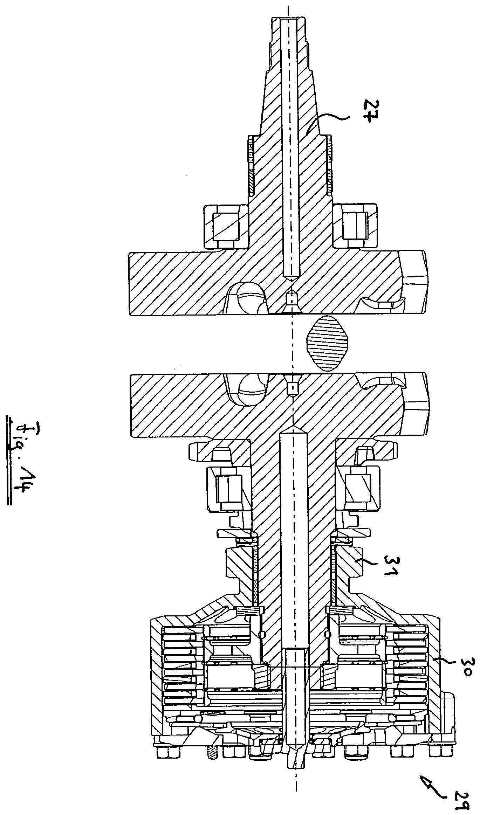

Figur 14 zeigt die Gesamtanordnung aus Kurbelwelle 27 und der auf der Kurbelwelle 27 angeordneten Lamellenkupplung 29.

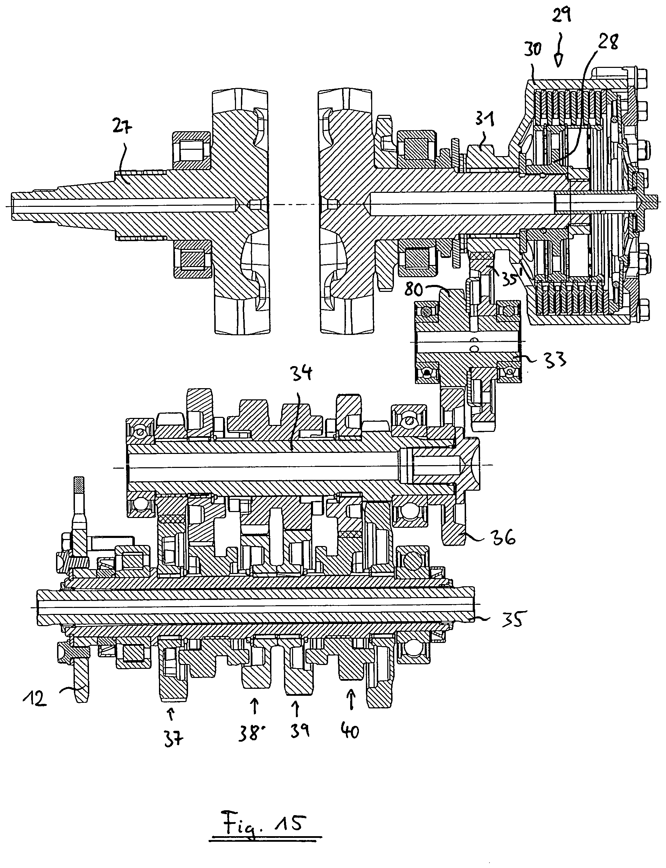

Figur 15 zeigt einen Schnitt durch die gesamte Motor-/Getriebeeinheit ähnlich dem der Figur 4, jedoch mit der in den Figuren 10-14 beschriebenen Kupplungsanordnung. Bei geschlossener Lamellenkupplung 29 wird das Drehmoment von der Kurbelwelle 27 auf das Innenteil 28 und über das Lamellenpaket auf den Kupplungskorb 30 und das damit verbundene Primärritzel 31 übertragen. Das Primärritzel 31 kämmt mit dem Zwischenrad 35', das drehfest mit einem Zahnrad 80 verbunden ist. Das Zahnrad 80 wiederum ist einstückig mit der Zwischenwelle 33 verbunden. Das Zahnrad 80 kämmt mit dem Getriebeeingangsritzel 36, das auf der Getriebeeingangswelle 34 angeordnet ist, von der das Drehmoment dann über eine der Zahnradstufen 37 - 40 auf die Getriebeausgangswelle 10 bzw. das Getriebeausgangsritzel 12 übertragen wird.

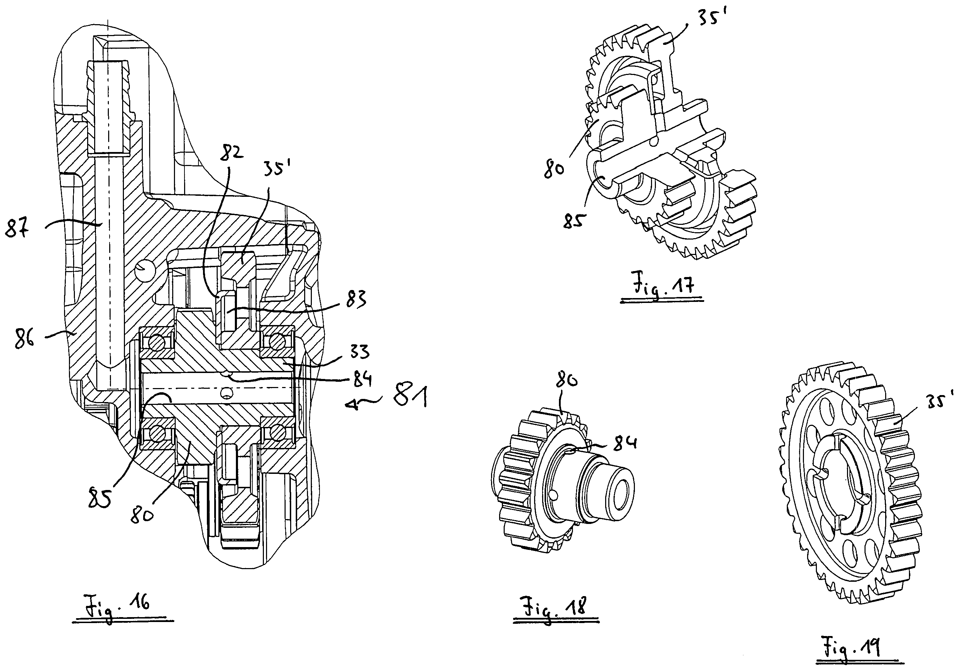

Die Figuren 16 - 19 zeigen Details des Zwischentriebs 81. Der Zwischentrieb 81 ist im Wesentlichen gebildet durch das mit dem Primärritzel 31 kämmende Zwischenrad 35' und das einstückig mit der Zwischenwelle 33 verbundene Zahnrad 80. Das Zwischenrad 35' ist auf die Zwischenwelle 33 aufgepresst und zusätzlich damit verschweißt. Zwischen das Zahnrad 80 und das Zwischenrad 35' ist ein Blechtopf 82 eingesetzt, welcher zur Ölabscheidung dient. Zwischen dem Blechtopf 82 und zwischen Rad 35 ist ein Hohlraum 83 ausgebildet, der über Radialbohrungen 84 in Fluidverbindung mit einer in der Zwischenwelle 33 vorgesehenen zylindrischen Ausnehmung bzw. Bohrung 85 steht. Die zylindrische Ausnehmung 85 wiederum steht in Fluidverbindung mit einem im Getriebegehäuse 86 vorgesehenen Entlüftungskanal 87, welcher zur Motorentlüftung dient.

Mit Motoröl versetzte Luft dringt in den Hohlraum 83 ein. Mittels des Blechtopfs 82 wird das in der Luft dispers verteilte Motoröl abgeschieden. Die Abgase können aus dem Hohlraum 83 über die Radialbohrungen 84 in die zylindrische Ausnehmung 85 und von dort über den Entlüftungskanal 87 aus dem Motor- bzw. Getriebegehäuse 86 nach außen abgeführt werden.

## Patentansprüche

1. Fahrzeug (1), insbesondere Motorrad, mit
- einem Motor (19), der eine sich quer zu einer Fahrt- bzw. Längsrichtung des Fahrzeugs erstreckende Kurbelwelle (27) aufweist,
- einem Getriebe (20),
- einer koaxial zur Kurbelwelle (27) angeordneten Kupplung (29), welche einen geöffneten Zustand und einen geschlossenen Zustand einnehmen kann, wobei die Kupplung (29)
• im geschlossenen Zustand eine Drehmomentübertragung von der Kurbelwelle (27) auf das Getriebe (20) ermöglicht,
• ein Antriebselement (28) der Kupplung (29) drehfest mit der Kurbelwelle (27) verbunden ist und ein Abtriebselement (30) der Kupplung (29) drehbar in Bezug auf die Kurbelwelle (27) angeordnet ist
**dadurch gekennzeichnet, dass**
das Abtriebselement (30) der Kupplung (29) einstückig mit einem auf der Kurbelwelle (27) drehbar gelagerten Primärritzel (31) verbunden ist.

2. Fahrzeug (1) nach Anspruch 1, **dadurch gekennzeichnet, dass** die Kupplung (29) auf der Kurbelwelle (27) angeordnet ist.

3. Fahrzeug (1) nach einem der Ansprüche 1 oder 2, **dadurch gekennzeichnet, dass** die Kupplung (29) eine Lamellenkupplung ist und radial innen aufgehängte Lamellen (52) aufweist, die zwischen radial außen an dem Abtriebselement (30) aufgehängte Lamellen (53) eingreifen.

4. Fahrzeug (1) nach Anspruch 3, **dadurch gekennzeichnet, dass** das Antriebselement (30) ein Kupplungsinnenteil ist, mit dem die radial innen aufgehängten Lamellen (52) drehfest verbunden sind.

5. Fahrzeug (1) nach einem der Ansprüche 3 oder 4, **dadurch gekennzeichnet, dass** das Abtriebselement (30) der Kupplung (29) ein Kupplungskorb ist, in dem die radial außen aufgehängten Lamellen (53) angeordnet sind, wobei die radial außen aufgehängten Lamellen (53) drehfest mit dem Kupplungskorb verbunden sind.

6. Fahrzeug (1) nach Anspruch 5, **dadurch gekennzeichnet, dass** der Kupplungskorb (30) einstückig mit dem Primärritzel (31) verbunden ist.

7. Fahrzeug (1) nach einem der Ansprüche 1 bis 6, **dadurch gekennzeichnet, dass** das Primärritzel (31) mittels eines ersten Wälzlagers (32), insbesondere mittels eines Nadellagers, auf der Kurbelwelle (27) gelagert ist.

8. Fahrzeug (1) nach einem der Ansprüche 1 - 7, **dadurch gekennzeichnet, dass** das Abtriebselement (30) in einer Axialrichtung, die parallel zu einer Längsrichtung der Kurbelwelle (27) ist, über ein zweites Wälzlager (57) an einem Gehäuse (50) des Motors (19) abgestützt ist.

9. Fahrzeug (1) nach Anspruch 8 unter Einschluss von Anspruch 5, **dadurch gekennzeichnet, dass** der Kupplungskorb (30) über das Primärritzel (31) und das zweite Wälzlager (57) an dem Gehäuse (50) des Motors (19) in Axialrichtung abgestützt ist.

10. Fahrzeug (1) nach einem der Ansprüche 5 - 9 jeweils unter Einschluss von Anspruch 5, **dadurch gekennzeichnet, dass** der Kupplungskorb (30) ein deckelartiges Element (75) aufweist, wobei mindestens eine sich an dem deckelartigen Element (75) in Axialrichtung abstützende Tellerfeder (69) vorgesehen ist, die einen radial äußeren Bereich (70) aufweist, der bei geschlossener Kupplung (27) eine Schließkraft auf das durch die Lamellen (52, 53) gebildete Lamellenpaket ausübt.

11. Fahrzeug (1) nach Anspruch 10, **dadurch gekennzeichnet, dass** mit dem deckelartigen Element (75) von einer Innenseite des Kupplungskorbs (30) her mehrere in einer Umfangsrichtung des Kupplungskorbs (30) voneinander beabstandete Schrauben (73, 74) verschraubt sind, die jeweils im Bereich ihres dem Inneren des Kupplungskorbs (30) zugewandten Endes einen Absatz (76) aufweisen, wobei die Absätze (76) der Schrauben (73, 74) einen sich in Umfangsrichtung des Kupplungskorbs (30) erstreckenden Ring (72) in Axialrichtung abstützen, wobei an einer dem deckelartigen Element (75) zugewandten Seite des Rings (72) ein radial mittlerer Bereich der mindestens einen Tellerfeder (69) anliegt.

12. Fahrzeug (1) nach einem der Ansprüche 10 oder 11, **dadurch gekennzeichnet, dass** zum Öffnen der Kupplung (29) ein in Axialrichtung verschiebliches Ausrückelement (68) vorgesehen ist, das an einem radial inneren Bereich der mindestens einen Tellerfeder (69) anliegt.

13. Fahrzeug (1) nach Anspruch 12, **dadurch gekennzeichnet, dass** zum Betätigen des Ausrückelements (68) ein in Axialrichtung verschieblicher Nehmerkolben (62) vorgesehen ist.

14. Fahrzeug (1) nach Anspruch 13, **dadurch gekennzeichnet, dass** der Nehmerkolben (62) in einem Nehmerzylinder (61) verschieblich angeordnet ist, wobei der Nehmerzylinder (61) in einem die Kupplung (29) überdeckenden Deckelelement (59) vorgesehen ist.

15. Fahrzeug (1) nach Anspruch 14, **dadurch gekennzeichnet, dass** der Nehmerzylinder (61) eine umlaufende nutartige Ausnehmung (63) aufweist, in die eine Dichtung (64') eingesetzt ist, welche eine Außenseite des Nehmerkolbens (62) umschließt.

16. Fahrzeug (1) nach einem der Ansprüche 14 oder 15, **dadurch gekennzeichnet, dass** das Deckelelement (59) an das Gehäuse (50) des Motors (19) angeflanscht ist.

17. Fahrzeug (1) nach einem der Ansprüche 1 - 16, **dadurch gekennzeichnet, dass** das Primärritzel (31) mit einem Zwischenrad (35') kämmt, das auf einer versetzt zur Kurbelwelle (27) angeordneten Zwischenwelle (33) angeordnet ist.

18. Fahrzeug (1) nach Anspruch 17, **dadurch gekennzeichnet, dass** das Zwischenrad (35') mit einem Zahnrad (36) einer Getriebeeingangswelle (34) drehgekoppelt ist, die in Richtung einer Hinterradschwinge (11) des Fahrzeugs (1) versetzt in Bezug auf die Zwischenwelle (33) angeordnet ist.

19. Fahrzeug (1) nach einem der Ansprüche 17 oder 18, **dadurch gekennzeichnet, dass** das Zwischenrad (35') auf die Zwischenwelle (33) aufgepresst und damit verschweißt ist.

20. Fahrzeug (1) nach einem der Ansprüche 17 - 19, **dadurch gekennzeichnet, dass** als integraler Bestandteil der Zwischenwelle (33) ein Zahnrad (80) vorgesehen ist, das mit dem Zahnrad (36) der Getriebeeingangswelle (34) kämmt.

21. Fahrzeug (1) nach einem der Ansprüche 17 - 20, **dadurch gekennzeichnet, dass** sich, in einer Seitenansicht des Fahrzeugs (1) gesehen, ein Außenumfang der Kupplung (29) bis in den Bereich der Zwischenwelle (33) erstreckt, nicht aber bis in den Bereich einer Getriebeausgangswelle (35).

22. Fahrzeug (1) nach Anspruch 21, **dadurch gekennzeichnet, dass** auf der Getriebeeingangswelle (34) und auf der Getriebeausgangswelle (35) mehrere miteinander in Eingriff befindliche schaltbare Zahnradstufen (37 - 40) angeordnet sind.

23. Fahrzeug (1) nach einem der Ansprüche 1 bis 22, mit
- einem Rahmen (5),
- einer Hinterradschwinge (11), die auf einer Schwingenachse (10) schwenkbar in Bezug auf den Rahmen (5) angeordnet ist, wobei
- das Getriebe (20) ein Getriebegehäuse (41) aufweist aus dem die Getriebeausgangswelle (35) heraussteht, wobei auf der Getriebeausgangswelle (35) ein Getriebeausgangsritzel (12) angeordnet ist, welches über ein Zugmittel (13) mit einem in einem Hinterradbereich des Fahrzeugs (1) angeordneten Kettenrad (14) gekoppelt ist, und wobei
das Getriebeausgangsritzel (12) koaxial zur Schwingenachse (10) angeordnet ist.

24. Fahrzeug (1) nach Anspruch 23, **dadurch gekennzeichnet, dass** sich die Schwingenachse (10) durch das Getriebegehäuse (41) hindurch erstreckt und auf gegenüberliegenden Seiten des Getriebegehäuses (41) aus dem Getriebegehäuse (41) heraussteht.

25. Fahrzeug (1) nach einem der Ansprüche 23 oder 24, **dadurch gekennzeichnet, dass** die Getriebeausgangswelle (35) im Getriebegehäuse (41) durch Wälzlager (42, 43) gelagert ist.

26. Fahrzeug (1) nach einem der Ansprüche 23 - 25, **dadurch gekennzeichnet, dass** die Getriebeausgangswelle (35) eine Hohlwelle ist.

27. Fahrzeug (1) nach einem der Ansprüche 23 - 26, **dadurch gekennzeichnet, dass** die Schwingenachse (10) sich durch die Getriebeausgangswelle (35) hindurch erstreckt.

28. Fahrzeug (1) nach einem der Ansprüche 23 - 27, **dadurch gekennzeichnet, dass** Enden (44, 45) der Schwingenachse (10) schwenkbar im Rahmen (5) gelagert sind.

29. Fahrzeug (1) nach Anspruch 28, **dadurch gekennzeichnet, dass** die Enden (44, 45) der Schwingenachse (10) durch dritte Wälzlager (46, 47) im Rahmen (5) gelagert sind.

30. Fahrzeug (1) nach Anspruch 29, **dadurch gekennzeichnet, dass** die dritten Wälzlager (46, 47) Kegelrollenlager sind.

31. Fahrzeug (1) nach Anspruch 30, **dadurch gekennzeichnet, dass** die Kegelrollenlager (46, 47) in O-Anordnung angeordnet sind.

32. Fahrzeug (1) nach einem der Ansprüche 23 - 31, **dadurch gekennzeichnet, dass** die Hinterradschwinge (11) mittels einer Klemmverbindung (48) an der Schwingenachse (10) fixiert ist.

33. Fahrzeug (1) nach einem der Ansprüche 23 - 32, **dadurch gekennzeichnet, dass** der Rahmen (5) mindestens zwei sich schneidende linke Rahmenrohre (6, 7) und mindestens zwei sich schneidende rechte Rahmenrohre (6', 7') aufweist und dass die Schwingenachse (10) sich durch einen Schnittpunkt der linken Rahmenrohre (6, 7) und durch einen Schnittpunkt der rechten Rahmenrohre (6', 7') erstreckt.

34. Fahrzeug (1) nach Anspruch 33, **dadurch gekennzeichnet, dass** der Motor (19) und das Getriebe (20) im Bereich zwischen den linken und den rechten Rahmenrohren (6, 7, 6', 7') angeordnet ist.

35. Fahrzeug (1) nach einem der Ansprüche 23 - 34, **dadurch gekennzeichnet, dass** der Rahmen (5) ein linkes und ein rechtes unteres Rahmenrohr (7, 7') aufweist, die in einer Seitenansicht des Fahrzeugs (1) gesehen, im Wesentlichen gerade sind und die sich von der Schwingenachse (10) nach vorne oben in einen Bereich unterhalb eines Lenkers (8) des Fahrzeugs (1) erstrecken.

36. Fahrzeug (1) nach Anspruch 35, **dadurch gekennzeichnet, dass** der Rahmen (5) ein linkes und ein rechtes oberes Rahmenrohr (6, 6') aufweist, die oberhalb der unteren Rahmenrohre (7, 7') angeordnet sind und die sich ebenfalls von einem Bereich unterhalb des Lenkers (8) zur Schwingenachse (10) nach hinten unten erstrecken.

37. Fahrzeug (1) nach Anspruch 36, **dadurch gekennzeichnet, dass** die oberen Rahmenrohre (6, 6') gebogen sind.

38. Fahrzeug (1) nach einem der Ansprüche 35 - 37, **dadurch gekennzeichnet, dass** ein Kühler (21) vorgesehen ist, der in einem Bereich unterhalb der unteren Rahmenrohre (7, 7') und vorderhalb des Motors (19) angeordnet ist.

39. Fahrzeug (1) nach einem der Ansprüche 36 - 38, **dadurch gekennzeichnet, dass** ein Luftfilter (23) vorgesehen ist, der in einem lenkernahen Bereich zwischen den linken und den rechten Rahmenrohren (6, 7, 6', 7') und zwischen den unteren und den oberen Rahmenrohren (6, 6'; 7, 7') angeordnet ist.

40. Fahrzeug (1) nach einem der Ansprüche 36 - 39, **dadurch gekennzeichnet, dass** eine Bordbatterie (26) vorgesehen ist, die in einem schwingenachsennahen Bereich zwischen den oberen und den unteren Rahmenrohren (6, 6'; 7, 7') oberhalb des Getriebes (20) angeordnet ist.

41. Fahrzeug (1) nach einem der Ansprüche 23 - 40, **dadurch gekennzeichnet, dass** zwischen der Hinterradschwinge (11) und dem Rahmen (5) ein Federbein (18) angeordnet ist, welches die Hinterradschwinge (11) gegenüber dem Rahmen (5) federt und dämpft.

42. Fahrzeug (1) nach Anspruch 41, **dadurch gekennzeichnet, dass**, in einer Seitenansicht des Fahrzeugs (1) gesehen, vordere Abschnitte (6a) der oberen Rahmenrohre (6, 6') in einer im wesentlichen geraden Verlängerung zu einer Längsachse des Federbeins (18) stehen.

43. Fahrzeug (1) nach einem der Ansprüche 41 oder 42, **dadurch gekennzeichnet, dass** ein Kraftstofftank (24) vorgesehen ist, der in einem oberen Bereich oberhalb des Federbeins (18) und unterhalb einer Sitzbank (25) des Fahrzeugs (1) angeordnet ist.

44. Fahrzeug (1) nach Anspruch 43, **dadurch gekennzeichnet, dass** der Kraftstofftank (24) an seiner Oberseite einen Tankdeckel aufweist, der durch Abnehmen der Sitzbank (25) zugänglich ist.

45. Motor-/Getriebeeinheit, insbesondere zum Einbau in ein Fahrzeug (1), insbesondere in ein Motorrad, mit
- einem Motor (19), der eine sich quer zu einer Fahrt- bzw. Längsrichtung des Fahrzeugs erstreckende Kurbelwelle (27) aufweist,
- einem Getriebe (20),
- einer koaxial zur Kurbelwelle (27) angeordneten Kupplung (29), welche einen geöffneten Zustand und einen geschlossenen Zustand einnehmen kann, wobei die Kupplung (29)
• im geschlossenen Zustand eine Drehmomentübertragung von der Kurbelwelle (27) auf das Getriebe (20) ermöglicht,
• ein Antriebselement (28) der Kupplung (29) drehfest mit der Kurbelwelle (27) verbunden ist und ein Abtriebselement (30) der Kupplung (29) drehbar in Bezug auf die Kurbelwelle (27) angeordnet ist
**dadurch gekennzeichnet, dass**
das Abtriebselement (30) der Kupplung (29) einstückig mit einem auf der Kurbelwelle (27) drehbar gelagerten Primärritzel (31) verbunden ist.

## Claims

1. A vehicle (1), especially motorcycle, with
- an engine (19) which has a crankshaft (27) extending transversely to a direction of travel or longitudinal direction of the vehicle,
- a gearbox (20),
- a clutch (29), arranged coaxially to the crankshaft (27), which can assume an opened state and a closed state, wherein the clutch (29)
• in the closed state permits transmission of torque from the crankshaft (27) to the gearbox (20),
• a drive element (28) of the clutch (29) is connected non-rotatably to the crankshaft (27) and an output element (30) of the clutch (29) is arranged rotatably with respect to the crankshaft (27),
**characterised in that**
the output element (30) of the clutch (29) is connected in one piece to a primary pinion (31) mounted rotatably on the crankshaft (27).

2. A vehicle (1) according to Claim 1, **characterised in that** the clutch (29) is arranged on the crankshaft (27).

3. A vehicle (1) according to one of Claims 1 or 2, **characterised in that** the clutch (29) is a multi-plate clutch and has plates (52) which are attached radially internally which engage between plates (53) which are attached radially externally to the output element (30).

4. A vehicle (1) according to Claim 3, **characterised in that** the drive element (30) is an internal clutch part to which the plates (52) which are attached radially internally are connected non-rotatably.

5. A vehicle (1) according to one of Claims 3 or 4, **characterised in that** the output element (30) of the clutch (29) is a clutch basket, in which the plates (53) which are attached radially externally are arranged, the plates (53) which are attached radially externally being connected non-rotatably to the clutch basket.

6. A vehicle (1) according to Claim 5, **characterised in that** the clutch basket (30) is connected in one piece to the primary pinion (31).

7. A vehicle (1) according to one of Claims 1 to 6, **characterised in that** the primary pinion (31) is mounted on the crankshaft (27) by means of a first rolling bearing (32), especially by means of a needle bearing.

8. A vehicle (1) according to one of Claims 1 - 7, **characterised in that** the output element (30) is supported, in an axial direction which is parallel to a longitudinal direction of the crankshaft (27), on a housing (50) of the engine (19) by way of a second rolling bearing (57).

9. A vehicle (1) according to Claim 8 and appendant to Claim 5, **characterised in that** the clutch basket (30) is supported in the axial direction on the housing (50) of the engine (19) by way of the primary pinion (31) and the second rolling bearing (57).

10. A vehicle (1) according to one of Claims 5 - 9 and in each case appendant to Claim 5, **characterised in that** the clutch basket (30) has a cover-like element (75), with at least one disc spring (69) which is supported in the axial direction on the cover-like element (75) being provided, which spring has a radially outer region (70) which when the clutch (27) is closed exerts a closing force on the set of plates formed by the plates (52, 53).

11. A vehicle (1) according to Claim 10, **characterised in that** a plurality of screws (73, 74) which are spaced apart from each other in a peripheral direction of the clutch basket (30) are screwed to the cover-like element (75) from an inner side of the clutch basket (30), which screws in each case, in the region of their end facing the interior of the clutch basket (30), have a shoulder (76), with the shoulders (76) of the screws (73, 74) supporting in the axial direction a ring (72) extending in the peripheral direction of the clutch basket (30), with a radially middle region of the at least one disc spring (69) bearing against a side of the ring (72) which faces the cover-like element (75).

12. A vehicle (1) according to one of Claims 10 or 11, **characterised in that** a disengagement element (68) which is displaceable in the axial direction is provided for opening the clutch (29), which element bears against a radially inner region of the at least one disc spring (69).

13. A vehicle (1) according to Claim 12, **characterised in that** a slave piston (62) which is displaceable in the axial direction is provided to actuate the disengagement element (68).

14. A vehicle (1) according to Claim 13, **characterised in that** the slave piston (62) is arranged displaceably in a slave cylinder (61), the slave cylinder (61) being provided in a cover element (59) which covers the clutch (29).

15. A vehicle (1) according to Claim 14, **characterised in that** the slave cylinder (61) has a circumambient groove-like recess (63) into which a seal (64') is inserted which encompasses an outer side of the slave piston (62).

16. A vehicle (1) according to one of Claims 14 or 15, **characterised in that** the cover element (59) is flanged to the housing (50) of the engine (19).

17. A vehicle (1) according to one of Claims 1 - 16, **characterised in that** the primary pinion (31) meshes with an intermediate gear (35') which is arranged on an intermediate shaft (33) arranged offset from the crankshaft (27).

18. A vehicle (1) according to Claim 17, **characterised in that** the intermediate gear (35') is rotationally coupled with a gear wheel (36) of a gearbox input shaft (34) which is arranged in the direction of a rear swing arm (11) of the vehicle (1) offset with regard to the intermediate shaft (33).

19. A vehicle (1) according to one of Claims 17 or 18, **characterised in that** the intermediate gear (35') is pressed onto the intermediate shaft (33) and is welded thereto.

20. A vehicle (1) according to one of Claims 17 - 19, **characterised in that** a gear wheel (80) is provided as an integral component of the intermediate shaft (33), which gear wheel meshes with the gear wheel (36) of the gearbox input shaft (34).

21. A vehicle (1) according to one of Claims 17 - 20, **characterised in that**, viewed in a side view of the vehicle (1), an outer periphery of the clutch (29) extends into the region of the intermediate shaft (33), but not into the region of a gearbox output shaft (35).

22. A vehicle (1) according to Claim 21, **characterised in that** a plurality of selectable gearwheel stages (37 - 40) which are engaged with each other are arranged on the gearbox input shaft (34) and on the gearbox output shaft (35).

23. A vehicle (1) according to one of Claims 1 to 22, with
- a frame (5),
- a rear swing arm (11) which is arranged pivotably with regard to the frame (5) on a swing arm pivot (10), wherein
- the gearbox (20) has a gearbox housing (41) from which the gearbox output shaft (35) protrudes, wherein a gearbox output pinion (12) is arranged on the gearbox output shaft (35), which pinion is coupled by way of a traction mechanism (13) with a sprocket (14) arranged in a rear-wheel region of the vehicle (1), and wherein
the gearbox output pinion (12) is arranged coaxially to the swing arm pivot (10).

24. A vehicle (1) according to Claim 23, **characterised in that** the swing arm pivot (10) extends through the gearbox housing (41) and protrudes from the gearbox housing (41) on opposing sides of the gearbox housing (41).

25. A vehicle (1) according to one of Claims 23 or 24, **characterised in that** the gearbox output shaft (35) is mounted in the gearbox housing (41) by rolling bearings (42, 43).

26. A vehicle (1) according to one of Claims 23 - 25, **characterised in that** the gearbox output shaft (35) is a hollow shaft.

27. A vehicle (1) according to one of Claims 23 - 26, **characterised in that** the swing arm pivot (10) extends through the gearbox output shaft (35).

28. A vehicle (1) according to one of Claims 23 - 27, **characterised in that** ends (44, 45) of the swing arm pivot (10) are mounted pivotably in the frame (5).

29. A vehicle (1) according to Claim 28, **characterised in that** the ends (44, 45) of the swing arm pivot (10) are mounted in the frame (5) by third rolling bearings (46, 47).

30. A vehicle (1) according to Claim 29, **characterised in that** the third rolling bearings (46, 47) are tapered roller bearings.

31. A vehicle (1) according to Claim 30, **characterised in that** the tapered roller bearings (46, 47) are arranged in an O-arrangement.

32. A vehicle (1) according to one of Claims 23 - 31, **characterised in that** the rear swing arm (11) is fixed to the swing arm pivot (10) by means of a clamping connection (48).

33. A vehicle (1) according to one of Claims 23 - 32, **characterised in that** the frame (5) has at least two intersecting left-hand frame tubes (6, 7) and at least two intersecting right-hand frame tubes (6', 7'), and **in that** the swing arm pivot (10) extends through a point of intersection of the left-hand frame tubes (6, 7) and through a point of intersection of the right-hand frame tubes (6', 7').

34. A vehicle (1) according to Claim 33, **characterised in that** the engine (19) and the gearbox (20) are arranged in the region between the left-hand and the right-hand frame tubes (6, 7, 6', 7').

35. A vehicle (1) according to one of Claims 23 - 34, **characterised in that** the frame (5) has a left-hand and a right-hand lower frame tube (7, 7') which, viewed in a side view of the vehicle (1), are substantially straight and which extend from the swing arm pivot (10) forwards and upwards into a region below a handlebar (8) of the vehicle (1).

36. A vehicle (1) according to Claim 35, **characterised in that** the frame (5) has a left-hand and a right-hand upper frame tube (6, 6') which are arranged above the lower frame tubes (7, 7') and which likewise extend rearwards and downwards from a region below the handlebar (8) to the swing arm pivot (10).

37. A vehicle (1) according to Claim 36, **characterised in that** the upper frame tubes (6, 6') are bent.

38. A vehicle (1) according to one of Claims 35 - 37, **characterised in that** a radiator (21) is provided which is arranged in a region below the lower frame tubes (7, 7') and in front of the engine (19).

39. A vehicle (1) according to one of Claims 36 - 38, **characterised in that** an air filter (23) is provided which is arranged in a region close to the handlebar between the left-hand and the right-hand frame tubes (6, 7, 6', 7') and between the lower and the upper frame tubes (6, 6'; 7, 7').

40. A vehicle (1) according to one of Claims 36 - 39, **characterised in that** an onboard battery (26) is provided which is arranged in a region close to the swing arm pivot between the upper and the lower frame tubes (6, 6'; 7, 7') above the gearbox (20).

41. A vehicle (1) according to one of Claims 23 - 40, **characterised in that** between the rear swing arm (11) and the frame (5) there is arranged a suspension strut (18) which springs and damps the rear swing arm (11) with respect to the frame (5).

42. A vehicle (1) according to Claim 41, **characterised in that**, viewed in a side view of the vehicle (1), front portions (6a) of the upper frame tubes (6, 6') are in a substantially straight extension to a longitudinal axis of the suspension strut (18).

43. A vehicle (1) according to one of Claims 41 or 42, **characterised in that** a fuel tank (24) is provided which is arranged in an upper region above the suspension strut (18) and below a seat (25) of the vehicle (1).

44. A vehicle (1) according to Claim 43, **characterised in that** the fuel tank (24) has on its upper side a tank cap which is accessible by removing the seat (25).

45. An engine/gearbox unit, especially for installation in a vehicle (1), especially in a motorcycle, with
- an engine (19) which has a crankshaft (27) extending transversely to a direction of travel or longitudinal direction of the vehicle,
- a gearbox (20),
- a clutch (29), arranged coaxially to the crankshaft (27), which can assume an opened state and a closed state, wherein the clutch (29)
• in the closed state permits transmission of torque from the crankshaft (27) to the gearbox (20),
• a drive element (28) of the clutch (29) is connected non-rotatably to the crankshaft (27) and an output element (30) of the clutch (29) is arranged rotatably with respect to the crankshaft (27),
**characterised in that**
the output element (30) of the clutch (29) is connected in one piece to a primary pinion (31) mounted rotatably on the crankshaft (27).

## Revendications

1. Véhicule (1) notamment motocyclette comprenant :
- un moteur (19) ayant un vilebrequin (27) orienté transversalement à la direction de circulation ou direction longitudinale du véhicule,
- une transmission (20),
- un embrayage (29) installé co-axialement au vilebrequin (27) et qui peut prendre un état débrayé et un état embrayé,
l'embrayage (29),
• qui à l'état embrayé, permet de transmettre le couple du vilebrequin (27) à la transmission (20),
• comporte un élément d'entrée (28) de l'embrayage (29) relié solidairement au vilebrequin (27) et un élément de sortie (30) de l'embrayage (29) monté à rotation par rapport au vilebrequin (27),
**caractérisé en ce que**
l'élément de sortie (30) de l'embrayage (29) est relié en une seule pièce avec un pignon primaire (31) monté à rotation sur le vilebrequin (27).

2. Véhicule (1) selon la revendication 1,
**caractérisé en ce que**
l'embrayage (29) est installé sur le vilebrequin (27).

3. Véhicule (1) selon l'une des revendications 1 ou 2,
**caractérisé en ce que**
l'embrayage (29) est un embrayage à lamelles, comportant des lamelles (52), radialement intérieures, suspendues, qui pénètrent entre des lamelles (53) suspendues radialement à l'extérieur, sur l'élément de sortie (30).

4. Véhicule (1) selon la revendication 3,
**caractérisé en ce que**
l'élément d'entraînement (30) est la partie intérieure de l'embrayage à laquelle les lamelles suspendues (52), radialement intérieures, sont reliées solidairement en rotation.

5. Véhicule (1) selon l'une des revendications 3 ou 4,
**caractérisé en ce que**
l'élément de sortie (30) de l'embrayage (29) est une cage d'embrayage munie des lamelles (53) suspendues radialement à l'extérieur, ces lamelles (53) suspendues radialement à l'extérieur, étant reliées solidairement en rotation à la cage de l'embrayage.

6. Véhicule (1) selon la revendication 5,
**caractérisé en ce que**
la cage de l'embrayage (30) est relié en une seule pièce au pignon primaire (31).

7. Véhicule (1) selon l'une des revendications 1 à 6,
**caractérisé en ce que**
le pignon primaire (31) est monté sur le vilebrequin (27) par l'intermédiaire d'un premier palier à roulement (32), notamment par un palier à aiguilles.

8. Véhicule (1) selon l'une des revendications 1 à 7,
**caractérisé en ce que**
l'élément de sortie (30) est appuyé par un second palier à roulement (57) contre le boîtier (50) du moteur (19), dans la direction axiale qui est parallèle à la direction longitudinale du vilebrequin (27).

9. Véhicule (1) selon la revendication 8 avec la revendication 5,
**caractérisé en ce que**
la cage d'embrayage (30) est appuyé dans la direction axiale par le pignon primaire (31) et le second palier à roulement (57) contre le boîtier (50) du moteur (19).

10. Véhicule (1) selon l'une des revendications 5 à 9, respectivement en combinaison avec la revendication 5,
**caractérisé en ce que**
la cage d'embrayage (30) a un élément (75) en forme de couvercle, et au moins un ressort Belleville (69) s'appuie dans la direction axiale contre l'élément en forme de couvercle (75) qui a une zone radialement extérieure (70) qui, exerce une force de fermeture sur le paquet de lamelles formé par les lamelles (52, 53) lorsque l'embrayage (27) est embrayé.

11. Véhicule (1) selon la revendication 10,
**caractérisé en ce que**
plusieurs vis (73, 74) réparties, écartées les unes des autres dans la direction périphérique de la cage d'embrayage (30) sont vissées à l'élément en forme de couvercle (75) à partir du côté intérieur de la cage d'embrayage (30), ces vis ayant respectivement, dans la zone de leur extrémité tournée vers l'intérieur de la cage d'embrayage (30), un épaulement (76), les épaulements (76) des vis (73, 74) s'appuyant dans la direction axiale contre un anneau (72) s'étendant dans la direction périphérique de la cage d'embrayage (30),
le côté de l'anneau (72) non tourné vers l'élément en forme de couvercle (75) recevant en appui, la zone médiane, radiale, d'au moins un ressort Belleville (69).

12. Véhicule (1) selon l'une des revendications 10 ou 11,
**caractérisé en ce qu'**
il comprend un élément de débrayage (68) coulissant dans la direction axiale pour débrayer l'embrayage (29), cet élément s'appliquant contre la zone radiale intérieure d'au moins un ressort Belleville (69).

13. Véhicule (1) selon la revendication 12,
**caractérisé par**
un piston récepteur (62) coulissant dans la direction axiale pour actionner l'élément de débrayage (68).

14. Véhicule (1) selon la revendication 13,
**caractérisé en ce que**
le piston récepteur (62) étant logé coulissant dans un cylindre récepteur (61), ce cylindre (61) étant dans un élément de couverture (59) couvrant l'embrayage (29).

15. Véhicule (1) selon la revendication 14,
**caractérisé en ce que**
le cylindre récepteur (61) a un évidement (63) périphérique en forme de rainure recevant un joint d'étanchéité (64') qui entoure le côté extérieur du piston récepteur (62).

16. Véhicule (1) selon l'une des revendications 14 ou 15,
**caractérisé en ce que**
l'élément de couverture (59) est fixé par une bride au boîtier (50) du moteur (19).

17. Véhicule (1) selon l'une des revendications 1 à 16,
**caractérisé en ce que**
le pignon primaire (31) engrène avec un pignon intermédiaire (35') monté sur un arbre intermédiaire (33) décalé par rapport au vilebrequin (27).

18. Véhicule (1) selon la revendication 17,
**caractérisé en ce que**
le pignon intermédiaire (35') est couplé en rotation avec un pignon denté (36) de l'arbre d'entrée de la transmission (34), et qui est décalé en direction du bras de roue arrière (11) du véhicule (1) par rapport à l'arbre intermédiaire (33).

19. Véhicule (1) selon l'une des revendications 17 ou 18,
**caractérisé en ce que**
le pignon intermédiaire (35') est fretté sur l'arbre intermédiaire (33) auquel il est soudé.

20. Véhicule (1) selon l'une des revendications 17-19,
**caractérisé en ce que**
un pignon (80) comme partie intégrante de l'arbre intermédiaire (33) engrène avec le pignon denté (36) de l'arbre d'entraînement de transmission (34).

21. Véhicule (1) selon l'une des revendications 17-20,
**caractérisé en ce qu'**
en vue de côté du véhicule (1), la périphérie extérieure de l'embrayage (29) s'étend jusque dans la zone de l'arbre intermédiaire (33) mais non jusque dans la zone de l'arbre de sortie de transmission (35).

22. Véhicule (1) selon la revendication 21,
**caractérisé en ce que**
plusieurs étages de pignons d'entrée (37-40) commutables, en prise, sont prévus sur l'arbre d'entrainement de transmission (34) et l'arbre de sortie de transmission (35).

23. Véhicule (1) selon l'une des revendications 1 à 22,
comprenant :
- un châssis (5),
- un bras de roue arrière (11) monté oscillant sur l'axe de pivotement (10) par rapport au châssis (5),
- la transmission (20) ayant un boîtier de transmission (41) d'où est issu l'arbre de sortie de transmission (35), cet arbre de sortie de transmission (35) étant muni d'un pignon de sortie de transmission (12) couplé par un moyen de traction (13) à une roue à chaîne (14) dans la zone de la roue arrière du véhicule (1), et
le pignon de sortie de transmission (12) est co-axial à l'axe de pivotement (10).

24. Véhicule (1) selon la revendication 23,
**caractérisé en ce que**
l'axe de pivotement (10) s'étend à travers le boîtier de transmission (41) et dépasse du côté opposé du boîtier de transmission (41) par rapport à ce boîtier (41).

25. Véhicule (1) selon l'une des revendications 23 ou 24,
**caractérisé en ce que**
l'arbre de sortie de transmission (35) est monté par des paliers à roulement (42, 43) dans le boîtier de transmission (41).

26. Véhicule (1) selon l'une des revendications 23-25,
**caractérisé en ce que**
l'arbre de sortie de transmission (35) est un arbre creux.

27. Véhicule (1) selon l'une des revendications 23-26,
**caractérisé en ce que**
l'axe de pivotement (10) traverse l'arbre de sortie de transmission (35).

28. Véhicule (1) selon l'une des revendications 23-27,
**caractérisé en ce que**
les extrémités (44, 45) de l'axe de pivotement (10) sont montées pivotantes dans le châssis (5).

29. Véhicule (1) selon la revendication 28,
**caractérisé en ce que**
les extrémités (44, 45) de l'axe de pivotement (10) sont montées dans le cadre (5) par l'intermédiaire de troisièmes paliers à roulement (46, 47).

30. Véhicule (1) selon la revendication 29,
**caractérisé en ce que**
les troisièmes paliers à roulement (46, 47) sont des paliers à roulement coniques.

31. Véhicule (1) selon la revendication 30,
**caractérisé en ce que**
les paliers à roulement coniques (46, 47) sont installés selon un montage en O.

32. Véhicule (1) selon l'une des revendications 23-31,
**caractérisé en ce que**
le bras de la roue arrière (11) est fixé à l'axe de pivotement (10) par l'intermédiaire d'une liaison serrée (48).

33. Véhicule (1) selon l'une des revendications 23-32,
**caractérisé en ce que**
le cadre (5) a au moins deux tubes (6, 7) gauches qui se coupent et au moins deux tubes (6', 7') droits qui se coupent et l'axe de pivotement (10) traverse le point d'intersection des tubes de gauches (6, 7) et l'intersection des tubes droits (6', 7').

34. Véhicule (1) selon la revendication 33,
**caractérisé en ce que**
le moteur (19) et la transmission (20) sont dans la zone comprise entre les tubes gauches et droits (6, 7 ; 6', 7').

35. Véhicule (1) selon l'une des revendications 23-34,
**caractérisé en ce que**
le cadre (5) a un tube gauche et droit inférieur (7, 7') qui, en vue de côté, du véhicule (1) sont essentiellement droits et partent de l'axe de pivotement (10) vers l'avant, en haut, dans une zone sous le bras (8) du véhicule (1).

36. Véhicule (1) selon la revendication 35,
**caractérisé en ce que**
le cadre (5) a un tube supérieur (6, 6') gauche et droit qui sont au-dessus des tubes bas (7, 7') et descendent vers l'arrière à partir d'une zone sous le bras (8) vers l'axe de pivotement (10).

37. Véhicule (1) selon la revendication 36,
**caractérisé en ce que**
les tubes hauts (6, 6') sont cintrés.

38. Véhicule (1) selon l'une des revendications 35-37,
**caractérisé en ce qu'**il comprend
un radiateur (21) trouve dans la zone située sous les tubes bas (7, 7') et devant le moteur (19).

39. Véhicule (1) selon l'une des revendications 36-38,
**caractérisé par**
un filtre à air (23) situé dans la zone proche du guidon entre les tubes (6, 7 ; 6', 7') gauches et droits et entre les tubes bas et hauts (6, 6' ; 7, 7').

40. Véhicule (1) selon l'une des revendications 36 à 39,
**caractérisé par**
une batterie de bord (26) dans une zone proche de l'axe de pivotement entre le tube de châssis haut et le tube de châssis bas (6, 6' ; 7, 7') au-dessus de la transmission (20).

41. Véhicule (1) selon l'une des revendications 23-40,
**caractérisé par**
une jambe à ressort (18) entre le bras de roue arrière (11) et le cadre (5), cette jambe à ressort suspendant et amortissant le bras de la roue arrière (11) par rapport au cadre (5).

42. Véhicule (1) selon la revendication 41,
**caractérisé en ce qu'**
en vue de côté du véhicule (1), les segments avant (6a) des tubes hauts (6, 6') étant situés dans le prolongement essentiellement droit de l'axe longitudinal de la jambe à ressort (18).

43. Véhicule (1) selon l'une des revendications 41 ou 42,
**caractérisé en ce qu'**
il comprend un réservoir à carburant (24) dans la zone supérieure au-dessus de la jambe à ressort (18) et en dessous du siège banquette (25) du véhicule (1).

44. Véhicule (1) selon la revendication 43,
**caractérisé en ce que**
le réservoir à carburant (24) comporte un bouchon en son côté supérieur qui est accessible après enlèvement de la banquette (25).

45. Unité de moteur/transmission notamment pour être intégré à un véhicule (1) en particulier à une motocyclette comprenant :
- un moteur (19) ayant un arbre de vilebrequin (27) transversal à la direction de circulation ou de direction longitudinale du véhicule,
- une transmission (20),
- un embrayage (29) installé co-axialement à l'arbre de vilebrequin (27) et qui peut prendre un état débrayé et un état embrayé, l'embrayage (29),
• à l'état embrayé permettant de transmettre le couple de l'arbre de vilebrequin (27) à la transmission (20),
• un élément d'entrée (28) de l'embrayage (29) étant solidaire en rotation de l'arbre de vilebrequin (27) et un élément de sortie (30) de l'embrayage (29) étant en rotation par rapport à l'arbre de vilebrequin (27),
unité **caractérisée en ce que**
l'élément de sortie (30) de l'embrayage (29) est réalisé en une seule pièce avec le pignon primaire (31) monté à rotation sur le vilebrequin (27).
